# EUROPEAN PATENT APPLICATION

(11) **EP 3 565 341 A1**
(43) Date of publication of application: **06.11.2019**
(21) Application number: 17891142.6
(22) Date of filing: 13.01.2017
(51) Int. Cl.: H04W 72/04

(54) **CHANNEL LISTENING METHOD AND DEVICE**

(71) Applicant: Huawei Technologies Co., Ltd., Longgang District Shenzhen, Guangdong 518129 (CN)
(72) Inventor: LI, Yuan, Shenzhen Guangdong 518129 (CN); GUAN, Lei, Shenzhen Guangdong 518129 (CN)
(74) Representative: Isarpatent
(86) International application number: PCT/CN2017/071186
(87) International publication number: WO 2018/129725

(57) **Abstract**

Embodiments of this application provide a channel listening method and apparatus. The method includes: receiving, by a terminal, uplink grant information sent by a base station; determining a first uplink reference resource and a second uplink reference resource based on the uplink grant information; determining a contention window size based on the first uplink reference resource and the second uplink reference resource; and listening to a channel based on the contention window size. According to this technical solution, a real-time channel state can be accurately reflected, so that a probability of a collision between nodes can be reduced, and a channel access opportunity is increased.

## Description

### TECHNICAL FIELD

This application relates to the field of wireless communications technologies, and in particular, to a channel listening method and apparatus.

### BACKGROUND

Developed based on a licensed-assisted access using Long Term Evolution (Licensed-Assisted Access using Long Term Evolution, LAA-LTE) technology, enhanced licensed-assisted access (enhanced LAA, eLAA) is a system in which uplink transmission is supported on an unlicensed spectrum. Similar to uplink transmission in an LAA system, uplink transmission in the eLAA system also needs a listen-before-talk (Listen-Before-Talk, LBT) channel access mechanism. Random backoff (Type 1 UL channel access, CCA) is an LBT listening mechanism. Specifically, radio communications equipment evenly and randomly generates a backoff counter N between 0 and a contention window size (Contention Window Size, CWS), and determines whether to decrease the backoff counter by 1 based on a busy or idle state of a channel; and when the backoff counter decreases to 0, the radio communications equipment immediately occupies the channel. Therefore, how to adjust the CWS during uplink transmission is a key issue.

For the eLAA system in which all transmission time intervals (Transmission Time Interval, TTI) are 1-ms TTIs, granularities of time-domain scheduling and transmission are per 1 ms, a decoding latency of each uplink subframe is 4 ms, and a scheduling latency of each uplink subframe is also 4 ms. In this case, an uplink reference subframe is an initial uplink subframe in a most recent uplink burst that is 3 ms before a subframe in which a terminal receives an uplink grant (UL grant), and the initial uplink subframe accesses a channel through random backoff LBT. Therefore, a real-time channel state can be reflected by adjusting the CWS based on a state of the uplink reference subframe.

However, to reduce a transmission latency in an LTE system and improve user experience, a short transmission time interval (short TTI, sTTI) that is shorter than the 1 ms transmission time interval is introduced to the eLAA system, and the terminal supports dynamic switching between the 1-ms TTI and the sTTI. Therefore, a decoding latency of the sTTI is k sTTIs and less than the decoding latency (4 ms) of the 1-ms TTI, and a scheduling latency of the sTTI is also k sTTIs and less than the scheduling latency (4 ms) of the 1-ms TTI. A shortest retransmission latency of the sTTI is 2^{∗}k sTTIs and less than a shortest retransmission latency (8 ms) of the 1-ms TTI. Therefore, for the eLAA system that includes the 1-ms TTI and the sTTI, a most real-time channel state may fail to be reflected if the initial uplink subframe in the most recent uplink burst that is 3 ms before the subframe in which the uplink grant UL grant is located is still used as the reference subframe.

In conclusion, for the eLAA system that includes the 1-ms TTI and the sTTI, a most real-time channel state cannot be reflected because the initial uplink subframe in the most recent uplink burst that is 3 ms before the subframe in which the uplink grant UL grant is located is used as the reference subframe,.

### SUMMARY

Embodiments of this application provide a channel listening method and apparatus, to overcome a problem that a real-time channel state cannot be reflected in an existing channel listening method.

A first aspect of this application provides a channel listening method. The method is applicable to a wireless communications system that can operate on an unlicensed spectrum and that supports at least two transmission time intervals or at least two uplink decoding latencies. A base station in the wireless communications system sends downlink information on the unlicensed spectrum, and a terminal in the wireless communications system sends uplink information on the unlicensed spectrum. The method includes:
receiving, by the terminal, uplink grant information sent by the base station;
determining, by the terminal, a first uplink reference resource and a second uplink reference resource based on the uplink grant information;
determining, by the terminal, a contention window size based on the first uplink reference resource and the second uplink reference resource; and
listening to, by the terminal, a channel based on the contention window size.

In this embodiment of this application, the terminal determines two uplink reference resources based on the uplink grant information and adjusts and determines the contention window size based on the two reference resources. In this way, a real-time channel state can be accurately reflected, so that a probability of a collision between nodes can be reduced, and a channel access opportunity is increased.

Optionally, the uplink grant information includes a first uplink grant; and
the determining, by the terminal, a first uplink reference resource and a second uplink reference resource based on the uplink grant information includes: determining, by the terminal, the first uplink reference resource and the second uplink reference resource based on the first uplink grant.

In this embodiment, the terminal can determine two different uplink reference resources based on a same uplink grant, and the terminal adjusts the contention window size by using the two different uplink reference resources. In this way, accuracy of the channel listening is improved.

Optionally, the first uplink reference resource is earlier than the first uplink grant, a time interval between the first uplink reference resource and the first uplink grant is greater than or equal to a first preset time interval, the second uplink reference resource is earlier than the first uplink grant, a time interval between the second uplink reference resource and the first uplink grant is greater than or equal to a second preset time interval, and the first preset time interval is greater than the second preset time interval.

The first preset time interval is a shortest time interval between the first uplink reference resource and a first reference uplink grant, and the second preset time interval is a shortest time interval between the second uplink reference resource and a second reference uplink grant. Optionally, the first preset time interval may correspond to a decoding latency of an uplink channel or a transport block in the first uplink reference resource, and the second preset time interval may correspond to a decoding latency of an uplink channel or a transport block in the second uplink reference resource. The decoding latency of the uplink channel or the transport block in the second uplink reference resource is less than the decoding latency of the uplink channel or the transport block in the first uplink reference resource. Therefore, the first preset time interval is greater than the second preset time interval.

Optionally, the uplink grant information includes a first uplink grant and a second uplink grant; and
the determining, by the terminal, a first uplink reference resource and a second uplink reference resource based on the uplink grant information includes: determining, by the terminal, the first uplink reference resource based on the first uplink grant, and determining the second uplink reference resource based on the second uplink grant.

In this embodiment, the second uplink grant and the first uplink grant are different and are separately located in different downlink transmission time intervals or in different downlink subframes. In this case, the first uplink grant and the second uplink grant used for scheduling different downlink transmission time intervals may be located on different moments in downlink subframes, and an uplink service scheduled by using the first uplink grant and an uplink service scheduled by using the second uplink grant are of different priorities. The base station may be able to send only one uplink grant but unable to immediately send two uplink grants at the same time. Therefore, two different uplink grants (which correspond to different TTI lengths or decoding latencies) are selected to separately determine two uplink reference resources.

Optionally, the first uplink reference resource is earlier than the first uplink grant, a time interval between the first uplink reference resource and the first uplink grant is greater than or equal to a first preset time interval, the second uplink reference resource is earlier than the second uplink grant, a time interval between the second uplink reference resource and the second uplink grant is greater than or equal to a second preset time interval, and the first preset time interval is greater than the second preset time interval.

In this embodiment, the first preset time interval is a shortest time interval between the first uplink reference resource and a first reference uplink grant, and the second preset time interval is a shortest time interval between the second uplink reference resource and a second reference uplink grant. The first reference uplink grant is an uplink grant used by the base station to schedule the terminal to perform initial transmission or retransmission based on at least one hybrid automatic repeat request process in the first uplink reference resource, and the second reference uplink grant is an uplink grant used by the base station to schedule the terminal to perform initial transmission or retransmission based on at least one hybrid automatic repeat request process in the second uplink reference resource.

Optionally, the determining, by the terminal, a contention window size based on the first uplink reference resource and the second uplink reference resource includes:
determining, by the terminal, that the more recent of the first uplink reference resource and the second uplink reference resource is a target reference resource; and
determining, by the terminal, the contention window size based on the target reference resource.

In this embodiment, when both the first uplink reference resource and the second uplink reference resource are determined based on the first uplink grant, of the first uplink reference resource and the second uplink reference resource, a reference resource closer to the first uplink grant is the target reference resource; or when the first uplink reference resource is determined based on the first uplink grant and the second uplink reference resource is determined based on the second uplink grant, of the first uplink reference resource and the second uplink reference resource, a reference resource closer to the more recent of the first uplink grant and the second uplink grant is the target reference resource. Because the target reference resource is the more recent reference resource, the target reference resource can accurately reflect a real-time channel state, and then an accurate contention window size can be determined.

Optionally, the determining, by the terminal, the contention window size based on the target reference resource includes:
decreasing, by the terminal, the contention window size when the terminal receives that a receiving state of at least one hybrid automatic repeat request HARQ process in the target reference resource is acknowledgement.

In this embodiment, that the receiving state of at least one hybrid automatic repeat request process is acknowledgement includes that a new data indicator of a hybrid automatic repeat request process corresponding to at least one hybrid automatic repeat request process number or a new data indicator of a transport block corresponding to at least one hybrid automatic repeat request process number is in a "toggled" state. In other words, the base station instructs the terminal to initially transmit the hybrid automatic repeat request process or use the hybrid automatic repeat request process number to transmit new data. In this case, the contention window size may be decreased to increase an access opportunity for a next time.

Optionally, the determining, by the terminal, the contention window size based on the target reference resource includes:
increasing, by the terminal, the contention window size when a receiving state, which is received by the terminal, of each of at least one HARQ process in the target reference resource is negative acknowledgement, or when the terminal receives no receiving state of any HARQ process in the target reference resource.

In this embodiment, if the terminal receives a receiving state, which is indicated by the base station, of each of at least one HARQ process or transport block in the target reference resource, but the receiving state of each of the at least one HARQ process or transport block is negative acknowledgement, or if the terminal receives no receiving state, which is indicated by the base station, of any HARQ process in the target reference resource, it indicates that the uplink reference subframe may collide with one or more other wireless nodes. Therefore, the contention window size is to be increased to reduce a probability of a collision during next access.

Optionally, the determining, by the terminal, a contention window size based on the first uplink reference resource and the second uplink reference resource includes:
when the terminal receives a receiving state of at least one HARQ process in the first uplink reference resource and a receiving state of at least one HARQ process in the second uplink reference resource, determining, by the terminal, the contention window size based on the received receiving state of the at least one HARQ process in the first uplink reference resource and the received receiving state of the at least one HARQ process in the second uplink reference resource.

In this embodiment, when the terminal receives the receiving state of the at least one HARQ process in the first uplink reference resource and the receiving state of the at least one HARQ process in the second uplink reference resource, if a received receiving state of any one of the at least one HARQ process is acknowledgement, the contention window size is to be decreased, or if all of the receiving states of the HARQ processes are negative acknowledgement, the contention window size is to be increased. In this way, a probability of a collision between nodes can be reduced, and a channel access opportunity is increased.

Optionally, the determining, by the terminal, a contention window size based on the first uplink reference resource and the second uplink reference resource includes:
when the terminal receives a receiving state of at least one HARQ process in the first uplink reference resource but receives no receiving state of any HARQ process in the second uplink reference resource, determining, by the terminal, the contention window size based on the received receiving state of the at least one HARQ process in the first uplink reference resource; or
when the terminal receives no receiving state of any HARQ process in the first uplink reference resource but receives a receiving state of at least one HARQ process in the second uplink reference resource, determining, by the terminal, the contention window size based on the received receiving state of the at least one HARQ process in the second uplink reference resource.

If the terminal receives only a receiving state of at least one HARQ process included in either the first uplink reference resource or the second uplink reference resource, but receives no receiving state of any HARQ process included in the other uplink reference resource, the terminal can determine the contention window size based only on the received receiving state of the HARQ process in the uplink reference resource.

Optionally, the determining, by the terminal, a contention window size based on the first uplink reference resource and the second uplink reference resource includes:
increasing, by the terminal, the contention window size when the terminal receives no receiving state of any HARQ process in the first uplink reference resource and no receiving state of any HARQ process in the second uplink reference resource.

If the terminal receives no receiving state of any HARQ process included in either of the two uplink reference resources, this case is similar to the case in which only one uplink reference resource is selected to determine the contention window size and the base station cannot immediately schedule a HARQ process in the uplink reference resource to perform initial transmission or retransmission. Therefore, the terminal cannot obtain receiving state information, and accordingly increases the contention window size.

According to the technical solution in this embodiment, the CWS can be adjusted more accurately, and then a real-time channel state can be reflected more accurately.

Optionally, the first uplink reference resource includes a first uplink reference subframe, the second uplink reference resource includes a second uplink reference subframe, the first uplink reference subframe includes at least one first uplink data channel or at least one first transmission time interval, and the second uplink reference subframe includes at least one second uplink data channel or at least one second transmission time interval; or
the first uplink reference resource includes a first uplink reference subframe, the first uplink reference subframe includes at least one first uplink data channel or at least one first transmission time interval, and the second uplink reference resource includes at least one second uplink data channel or at least one second transmission time interval.

Optionally, a first time-domain resource length occupied by the first uplink data channel or the first transmission time interval is greater than a second time-domain resource length occupied by the second uplink data channel or the second transmission time interval.

A second aspect of the embodiments of this application provides a channel listening apparatus. The apparatus includes a module or a means (means) for performing the method according to the first aspect or the implementations of the first aspect.

A third aspect of the embodiments of this application provides a channel listening apparatus. The apparatus includes a transceiver and a processor.

The transceiver is configured to receive uplink grant information sent by a base station.

The processor is configured to: determine a first uplink reference resource and a second uplink reference resource based on the uplink grant information received by the transceiver; determine a contention window size based on the first uplink reference resource and the second uplink reference resource; and listen to a channel based on the contention window size.

Optionally, when the uplink grant information includes a first uplink grant, the processor is specifically configured to determine the first uplink reference resource and the second uplink reference resource based on the first uplink grant.

The first uplink reference resource is earlier than the first uplink grant, a time interval between the first uplink reference resource and the first uplink grant is greater than or equal to a first preset time interval, the second uplink reference resource is earlier than the first uplink grant, a time interval between the second uplink reference resource and the first uplink grant is greater than or equal to a second preset time interval, and the first preset time interval is greater than the second preset time interval.

Optionally, when the uplink grant information includes a first uplink grant and a second uplink grant, the processor is specifically configured to determine the first uplink reference resource based on the first uplink grant, and determine the second uplink reference resource based on the second uplink grant.

The first uplink reference resource is earlier than the first uplink grant, a time interval between the first uplink reference resource and the first uplink grant is greater than or equal to a first preset time interval, the second uplink reference resource is earlier than the second uplink grant, a time interval between the second uplink reference resource and the second uplink grant is greater than or equal to a second preset time interval, and the first preset time interval is greater than the second preset time interval.

Optionally, the processor is specifically configured to: determine that the more recent of the first uplink reference resource and the second uplink reference resource is a target reference resource; and determine the contention window size based on the target reference resource.

Optionally, the processor is specifically configured to decrease the contention window size when the transceiver receives that a receiving state of at least one hybrid automatic repeat request HARQ process in the target reference resource is acknowledgement.

Optionally, the processor is further specifically configured to increase the contention window size when a receiving state, which is received by the transceiver, of each of at least one hybrid automatic repeat request HARQ process in the target reference resource is negative acknowledgement, or when the transceiver receives no receiving state of any HARQ process in the target reference resource.

Optionally, the processor is specifically configured to: when the transceiver receives a receiving state of at least one hybrid automatic repeat request HARQ process in the first uplink reference resource and a receiving state of at least one HARQ process in the second uplink reference resource, determine the contention window size based on the received receiving state of the at least one HARQ process in the first uplink reference resource and the received receiving state of the at least one HARQ process in the second uplink reference resource.

Optionally, the processor is further specifically configured to: when the transceiver receives a receiving state of at least one hybrid automatic repeat request HARQ process in the first uplink reference resource but receives no receiving state of any HARQ process in the second uplink reference resource, determine the contention window size based on the received receiving state of the at least one HARQ process in the first uplink reference resource; or when the transceiver receives no receiving state of any HARQ process in the first uplink reference resource but receives a receiving state of at least one HARQ process in the second uplink reference resource, determine the contention window size based on the received receiving state of the at least one HARQ process in the second uplink reference resource.

Optionally, the processor is further specifically configured to increase the contention window size when the transceiver receives no receiving state of any hybrid automatic repeat request HARQ process in the first uplink reference resource and no receiving state of any HARQ process in the second uplink reference resource.

Optionally, the first uplink reference resource includes a first uplink reference subframe, the second uplink reference resource includes a second uplink reference subframe, the first uplink reference subframe includes at least one first uplink data channel or at least one first transmission time interval, and the second uplink reference subframe includes at least one second uplink data channel or at least one second transmission time interval; or
the first uplink reference resource includes a first uplink reference subframe, the first uplink reference subframe includes at least one first uplink data channel or at least one first transmission time interval, and the second uplink reference resource includes at least one second uplink data channel or at least one second transmission time interval.

Optionally, a first time-domain resource length occupied by the first uplink data channel or the first transmission time interval is greater than a second time-domain resource length occupied by the second uplink data channel or the second transmission time interval.

A fourth aspect of the embodiments of this application provides a channel listening apparatus, including at least one processing element (or chip) configured to perform the method according to the first aspect.

A fifth aspect of the embodiments of this application provides a communications system. The system includes the channel listening apparatus and the base station according to the foregoing aspects, and the base station is configured to send uplink grant information to the channel listening apparatus.

A sixth aspect of the embodiments of this application provides a computer readable storage medium. The computer readable storage medium stores an instruction. When the instruction is run on a computer, the computer performs the methods according to the foregoing aspects.

A seventh aspect of the embodiments of this application provides a computer program product including an instruction. When the computer program product runs on a computer, the computer performs the methods according to the foregoing aspects.

According to the foregoing aspects, the terminal receives the uplink grant information sent by the base station; determines the first uplink reference resource and the second uplink reference resource based on the uplink grant information; determines the contention window size based on the first uplink reference resource and the second uplink reference resource; and listens to the channel based on the determined contention window size. Different from the prior art, the terminal determines two uplink reference resources based on the uplink grant information and adjusts and determines the contention window size based on the two reference resources. In this way, a real-time channel state can be accurately reflected, so that a probability of a collision between nodes can be reduced, and a channel access opportunity is increased.

### BRIEF DESCRIPTION OF DRAWINGS

FIG. 1 is a schematic diagram of an LBT listening mechanism based on random backoff CCA;
FIG. 2A is a schematic diagram of contention window size adjustment in the prior art;
FIG. 2B is a schematic diagram of CWS adjustment in an eLAA system including a 1-ms TTI and an sTTI;
FIG. 3 is a schematic diagram of a communications system to which an embodiment of this application is applied;
FIG. 4 is a flowchart of Embodiment 1 of a channel listening method according to an embodiment of this application;
FIG. 5 is a schematic diagram of determining, by a terminal, a first uplink reference resource and a second uplink reference resource based on a first uplink grant according to an embodiment of this application;
FIG. 6 is a schematic diagram of determining, by a terminal, a first uplink reference resource based on a first uplink grant, and determining a second uplink reference resource based on a second uplink grant according to an embodiment of this application;
FIG. 7 is a flowchart of Embodiment 2 of a channel listening method according to an embodiment of this application;
FIG. 8 is a schematic diagram of a case in which a second uplink reference resource is earlier than a first uplink reference resource;
FIG. 9A to FIG. 9D are schematic diagrams of determining, by a terminal, a contention window size based on a target reference resource in the embodiment shown in FIG. 7;
FIG. 10A to FIG. 10B are schematic diagrams of determining, by a terminal, a contention window size based on a second uplink reference resource according to an embodiment of this application;
FIG. 11 is a flowchart of Embodiment 3 of a channel listening method according to an embodiment of this application;
FIG. 12A to FIG. 12D are schematic diagrams of determining, by a terminal, a contention window size based on a first uplink reference resource and a second uplink reference resource in the embodiment shown in FIG. 11;
FIG. 13 is a schematic structural diagram of a channel listening apparatus according to an embodiment of this application; and
FIG. 14 is a schematic structural diagram of another channel listening apparatus according to an embodiment of this application.

### DESCRIPTION OF EMBODIMENTS

An orthogonal frequency division multiplexing (Orthogonal Frequency Division Multiplexing, OFDM) technology is used in a Long Term Evolution (Long Term Evolution, LTE) system. In the LTE system, a smallest resource unit used to transmit data is a resource element (Resource Element, RE). One resource element corresponds to one OFDM symbol in time domain and one subcarrier in frequency domain. Based on the resource element, a resource block (Resource Block, RB) includes a plurality of consecutive OFDM symbols in time domain and consecutive subcarriers in frequency domain, and is a basic unit for resource scheduling.

In the LTE system, a single carrier is used for uplink transmission, and one RE corresponds to one single carrier frequency division multiple access (Single Carrier Frequency Division Multiple Access, SC-FDMA) symbol and one subcarrier in frequency domain. A granularity of uplink resource allocation in the LTE system is per transmission time interval (Transmission Time Interval, TTI). One TTI in a conventional LTE system is 14 OFDM symbols in length, in other words, one subframe, 1 ms in length.

Uplink transmission in the LTE system is scheduled by a base station. Specifically, the base station adds an uplink grant (UpLink grant, UL grant) to a downlink control channel and uses the UL grant to instruct user equipment (User Equipment, UE) to send a physical uplink shared channel (Physical Uplink Shared Channel, PUSCH) in a corresponding uplink subframe. One uplink subframe includes at least one transport block (Transmission Block, TB), and each TB corresponds to one hybrid automatic repeat request (Hybrid Automatic Repeat, HARQ) process number (HARQ ID).

If a TB is successfully received, the base station may use an uplink grant (UL grant) to instruct the UE to transmit new uplink data by using the HARQ process or transmit a new TB by using the HARQ process number, in other words, to perform initial transmission; or if a TB fails to be received, the base station also uses a UL grant, to instruct the UE to retransmit the HARQ process that fails to be transmitted or the TB corresponding to the HARQ process number.

The initial transmission and the retransmission are distinguished by using new data indicator (New Data Indicator, NDI) signaling included in the UL grant. Specifically, the base station uses an NDI to instruct or schedule the UE to perform initially transmission (when the NDI is "toggled") or retransmission (when the NDI is "non-toggled") on an uplink data channel, or based on the HARQ process, or the TB. The initial transmission indicates that a receiving state of the uplink data channel, the HARQ process, or the TB is acknowledgement (ACK), and the retransmission indicates that a receiving state of the uplink data channel, the HARQ process, or the TB is negative acknowledgement (NACK).

To extend an available bandwidth, a licensed-assisted access using Long Term Evolution (Licensed-Assisted Access using Long Term Evolution, LAA-LTE) system is introduced in Release 13 in an LTE specification. With a carrier aggregation (Carrier Aggregation, CA) technology, the LAA-LTE system can extend an available spectrum to a 5 GHz unlicensed frequency band, use a licensed spectrum to implement seamless coverage and carry some services with a high latency requirement, and use an unlicensed spectrum to carry some data services.

To enable base stations and UEs of different operators and a wireless node in an inter-RAT system such as Wi-Fi to coexist friendly in an unlicensed spectrum, a listen-before-talk (Listen-Before-Talk, LBT) channel access mechanism may be used in the LAA-LTE system, so that a communication channel is detected through clear channel assessment (Clear Channel Assessment, CCA), and information is sent after it is learned, through listening, that the channel is idle.

To further support uplink transmission on an unlicensed spectrum, an enhanced licensed-assisted access (enhanced LAA, eLAA) system is introduced in Release 14. Consistent with uplink transmission in an existing LTE system, uplink transmission in the eLAA system is performed by UE scheduled by a base station by sending a UL grant. The LBT also needs to be implemented in the uplink transmission in the eLAA system. Random backoff CCA is an LBT listening mechanism.

A specific procedure for random backoff CCA (Type 1 UL channel access) is as follows: Radio communications equipment evenly and randomly generates one backoff counter N between 0 and a contention window size (Contention Window Size, CWS), and performs listening on a per listening slot (CCA slot) basis; and decreases the backoff counter by 1 if it is detected that a channel is idle within the listening slot, or suspends the backoff counter if it is detected that a channel is busy, in other words, keeps the backoff counter N unchanged within busy time of the channel, until it is detected that the channel is idle. When the backoff counter decreases to 0, the radio communications equipment may immediately occupy the channel.

The CWS may be dynamically adjusted within a range. For example, a typical value of the CWS is a value in {15, 31, 63, 127, 255, 511, 1023}. Optionally, in the random backoff CCA, a typical value of the listening slot is 9 µs. A criterion for determining a channel state is as follows: The radio communications equipment compares a power received on the channel within the listening slot with an energy detection threshold. If the power is higher than the energy detection threshold, the channel is busy; or if the power is lower than the energy detection threshold, the channel is idle.

An uplink CWS in the eLAA system is adjusted based on whether a previous uplink data channel is accurately transmitted. The UE determines an uplink reference subframe. If a receiving state of a HARQ process or a TB included in the uplink reference subframe is correct, the UE decreases the CWS to increase an access opportunity for a next time; or if a receiving state of a HARQ process or a TB included in the uplink reference subframe is incorrect or the UE receives no receiving state of any HARQ process or any TB included in the uplink reference subframe, it indicates that the uplink reference subframe may collide with another wireless node, and therefore, the UE increases the CWS to reduce a probability of a collision during next access.

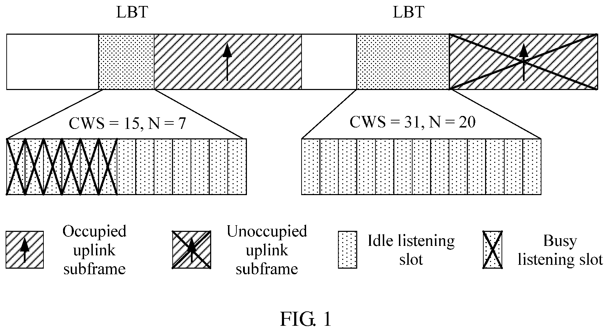

FIG. 1 is a schematic diagram of an LBT listening mechanism based on random backoff CCA. As shown in FIG. 1, in the LBT listening mechanism, when a CWS is 15, a corresponding backoff counter N is 7, and a channel is detected busy within a plurality of listening slots, the backoff counter is suspended, backoff continues after the channel is idle, and the backoff counter counts down to zero before an uplink TTI is scheduled; or when a CWS is 31 and N is 20, because a backoff counter has not counted down to zero before an uplink TTI when a terminal is scheduled, LBT fails, and the terminal cannot occupy the uplink TTI to send data information.

To further reduce a transmission latency in the LTE system and improve user experience, a latency reduction (Latency Reduction) technology is introduced in Release 14, to shorten a time domain granularity of resource allocation from a 1-ms TTI to a short transmission time interval (short TTI, sTTI), and reduce time taken to perform packet assembly and demodulation and decoding, thereby reducing a physical-layer air interface latency.

A time domain resource occupied by the sTTI is shorter than that occupied by the 1-ms TTI. In other words, when a TTI corresponding to an uplink data channel is an sTTI, a time domain resource occupied by the sTTI is shorter than 1 ms. The sTTI may support 7 SC-FDMA symbols (SC-FDMA Symbol, SS), 1 SS, 2 SSs, 2&3 SSs or 3&4 SSs, and other structures in length. In the 2&3-SS structure, in a subframe, some sTTIs include 2 symbols in length, and other sTTIs include 3 symbols in length; in the 3&4-SS structure, in a subframe, some sTTIs include 3 symbols in length, and other sTTIs include 4 symbols in length. The sTTI further supports other TTIs shorter than 1 ms. An LTE system supporting sTTI transmission can be backward compatible with the conventional 1-ms TTI LTE system through frequency division multiplexing.

In addition, to meet different latency requirements of different users, the base station may configure different sTTI lengths for different user equipments. The different sTTI lengths corresponding to the user equipments may be semi-statically adjusted between 1 SS, 2 SSs, 2&3 SSs, 3&4 SSs, or 7 SSs. In addition, dynamic switching between a same sTTI length and a 1-ms TTI length may be supported. Because a packet length of the sTTI is shortened, a decoding speed and a packet assembly speed are usually faster than those of the 1-ms TTI. Therefore, a scheduling latency and a HARQ feedback latency are also correspondingly shortened. For example, an uplink scheduling latency is shortened from 4 ms for the existing 1-ms TTI to k sTTIs, and an uplink decoding latency is shortened from 4 ms for the existing 1-ms TTI to k sTTIs, where k is a positive integer. Correspondingly, a shortest retransmission latency (a time interval between a TB transmission and a next TB transmission that correspond to a same HARQ ID) is shortened from 8 ms to 2^{∗}k sTTIs. In this embodiment of this application, "*" means multiplying. For example, 2^{∗}k means multiplying 2 by k. In other words, 2^{∗}k sTTIs indicate 2k sTTIs.

After the sTTI is introduced to the eLAA system in an unlicensed spectrum, because an uplink scheduling granularity is decreased, a chance for channel access success can be increased, and because an uplink scheduling latency is shortened, downlink-to-uplink switching time can be reduced, and channel use efficiency is improved. However, for UE that supports the sTTI transmission, how to adjust a CWS is a problem to be resolved.

Currently, a CWS adjustment mode defined in the Release 14 eLAA Protocol is directly used in the eLAA system. To be specific, UE determines an uplink reference subframe based on a UL grant sent by a base station, and adjusts a CWS based on a receiving state (an initial transmission state or a retransmission state) of a TB in the uplink reference subframe. If the UE receives a HARQ ID for the TB in the uplink reference subframe again, and NDI information corresponding to at least one HARQ ID is a "toggled" state, it indicates initial transmission, and therefore the CWS is to be decreased; if NDI information corresponding to all received HARQ IDs in the uplink reference subframe is a "non-toggled" state, it indicates retransmission, and therefore the CWS is to be increased; if the UE no longer receives a HARQ ID for the TB in the uplink reference subframe, it indicates that the base station does not immediately initially transmit or retransmit a demodulated uplink reference subframe, and therefore the CWS is also to be increased.

The NDI information is included in a UL grant used by the base station to schedule the UE to send an uplink subframe. The UL grant may be a UL grant used by the UE to determine the uplink reference subframe, or may not be a UL grant used by the UE to determine the uplink reference subframe.

Specifically, to ensure that the CWS adjustment can reflect a real-time channel state, the uplink reference subframe is defined as an initial uplink subframe in a most recent uplink burst (UL burst) that is 3 ms before a subframe in which the UE receives a UL grant (for example, a downlink subframe in which the base station sends the UL grant), the initial uplink subframe accesses a channel through a random backoff LBT, and the UE sends uplink data information UL-SCH by using the initial uplink subframe.

The uplink burst is a series of consecutive uplink subframes (for example, if two subframes are consecutive, the two subframes may be continuous in time domain, without any gap (Gap), or the two subframes may have continuous subframe numbers, with an gap (Gap) between the subframes) used by the UE to send uplink data information.

The uplink reference subframe is a subframe in which the UE actually sends the uplink data information. For example, an uplink subframe that is scheduled by the base station but fails to be sent by the UE because the UE fails to access a channel due to an LBT failure cannot be used as a reference subframe.

In the 1-ms TTI eLAA system, a decoding latency consumed when the base station receives the uplink reference subframe and determines a receiving state is 4 ms. Therefore, if the UE receives a UL grant in a subframe #n, the foregoing uplink burst is a most recent uplink burst and that is 3 ms before the subframe #n (referred to as #n-3). If the subframe #n-3 is an uplink subframe in which the UE sends uplink data information and that is included in an uplink burst, the uplink reference subframe is an initial uplink subframe for sending uplink data information in the uplink burst; or if the #n-3 is an initial uplink subframe for sending uplink data information in the uplink burst, the subframe #n-3 is the uplink reference subframe. Alternatively, if n_w is 3 ms before a subframe in which the UE receives a UL grant, in other words, is an uplink subframe that is before the #n-3 and closest to the #n-3 and in which the UE sends uplink data information, and the uplink burst is an uplink burst in which n_w is located, the uplink reference subframe is an initial uplink subframe in the uplink burst; or if n_w is an initial uplink subframe in the uplink burst, the uplink subframe n_w is the uplink reference subframe.

It should be noted that in this embodiment, the subframe #n is a subframe whose subframe number is #n, where n is a positive integer; a subframe #n+k is a subframe whose subframe number is #n+k, or is a corresponding subframe that is k ms after the subframe #n; and a subframe #n-k is a subframe whose subframe number is #n-k, or is a corresponding subframe that is k ms before the subframe #n. A TTI #n is a TTI whose TTI number is #n; a TTI #n+k is a TTI whose TTI number is #n+k, or is a k^{th} TTI after the TTI #n; and a TTI #n-k is a TTI whose TTI number is #n-k, or is a k^{th} TTI before the TTI #n.

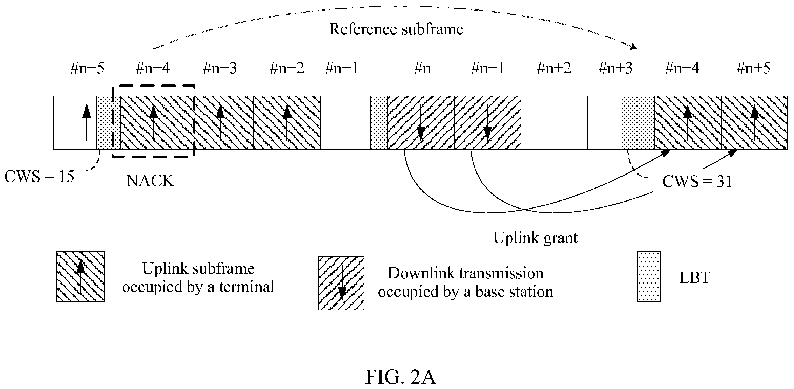

FIG. 2A is a schematic diagram of contention window size adjustment in the prior art. As shown in FIG. 2A, a terminal receives, in a subframe #n, an uplink grant UL grant sent by a base station. In this case, a most recent uplink burst and before a subframe #n-3 is an uplink burst including uplink subframes #n-4, #n-3, and #n-2. Because the uplink subframe #n-4 is a first uplink subframe in the uplink burst, in FIG. 2A, the uplink subframe #n-4 is a reference subframe.

Further, as shown in FIG. 2A, a receiving state of the uplink reference subframe #n-4 is "NACK", to be specific, negative acknowledgement. Therefore, a contention window size is to be correspondingly increased. For example, as shown in FIG. 2A, an original CWS is 15, and an adjusted CWS is 31.

For the eLAA system in which all transmission time intervals TTIs are 1-ms TTIs, because granularities of time-domain scheduling and transmission are both per 1 ms, a decoding latency of each uplink subframe is 4 ms, and a scheduling latency of each uplink subframe is also 4 ms, the uplink reference subframe can reflect a most real-time channel state. However, after the sTTI is introduced to the eLAA system, the UE supports dynamic switching between the 1-ms TTI and the sTTI, and because a decoding latency of the 1-ms TTI is 4 ms, and a scheduling latency of the 1-ms TTI is also 4 ms, a shortest retransmission latency corresponding to the 1-ms TTI is 8 ms. In addition, because a decoding latency of the sTTI is k sTTIs, a scheduling latency of the sTTI is also k sTTIs, and the k sTTIs are less than 4 ms, and a shortest retransmission latency corresponding to the sTTI is 2^{∗}k sTTIs and less than 8 ms.

Therefore, for the eLAA system that includes the 1-ms TTI and the sTTI, a most real-time channel state may fail to be reflected if the initial uplink subframe in the most recent uplink burst that is 3 ms before the subframe in which the uplink grant UL grant is received is still used as the reference subframe. A reason is that there may still be an sTTI that is 3 ms after the subframe in which the uplink grant UL grant is received, a retransmission latency of the sTTI is shorter, and the UE may obtain a receiving state of a TB in the sTTI.

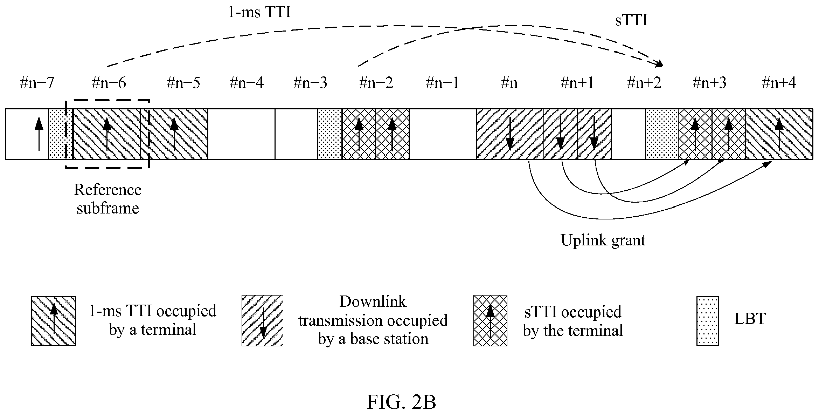

For example, FIG. 2B is a schematic diagram of CWS adjustment in an eLAA system including a 1-ms TTI and an sTTI. As shown in FIG 2B, a subframe #n-2 includes two sTTIs, a TTI length of each sTTI is 7 SSs, a decoding latency of the sTTI is 2 ms, and a base station actually uses a UL grant in a subframe #n+1 to schedule a HARQ process included in the two sTTIs to perform initial transmission or retransmission in a subframe #n+3. A subframe #n-6 corresponds to one 1-ms TTI, a decoding latency of the TTI is 4 ms, and the base station actually uses a UL grant in a subframe #n to schedule a HARQ process included in the 1-ms TTI to perform initial transmission or retransmission in a subframe #n+4. In FIG. 2B, the UE determines that a reference subframe is the subframe #n-6 based on the uplink grant UL grant received in the subframe #n and according to a rule that an initial uplink subframe in a most recent uplink burst that is 3 ms before a subframe in which the uplink grant UL grant is located is used as a reference subframe. However, because a retransmission latency of the sTTI is shorter, the UE also receives a receiving state of the sTTI before performing LBT on an uplink burst {#n+3, #n+4}. Apparently, using #n-2 or an sTTI included in #n-2 as a reference resource to adjust a CWS can more accurately reflect a real-time channel state. By contrast, according to the prior art, the most real-time channel state may fail to be reflected when an initial uplink subframe in a most recent uplink burst that is 3 ms before a subframe in which the uplink grant UL grant is located is used as a reference subframe.

To resolve the foregoing problem, embodiments of this application provide a channel listening method and a terminal, to resolve the prior-art problem that for the eLAA system that includes the 1-ms TTI and the sTTI, a most real-time channel state cannot be reflected if the initial uplink subframe in the most recent uplink burst that is 3 ms before the subframe in which the uplink grant UL grant is received is still used as the reference subframe.

The channel listening method provided in the embodiments of this application is applicable to a wireless communications system that can operate on an unlicensed spectrum and that supports at least two transmission time intervals or at least two uplink decoding latencies. A base station in the wireless communications system sends downlink information on the unlicensed spectrum, and a terminal in the wireless communications system sends uplink information on the unlicensed spectrum.

That the wireless communications system supports at least two transmission time intervals includes the following: When the terminal supports uplink transmission at 1-ms TTIs and uplink transmission at sTTIs, the terminal in the wireless communications system may send uplink information in a transport format of a common 1-ms TTI or in a transport format of the sTTI; or when the terminal supports uplink transmission at sTTIs of two different lengths, the terminal in the wireless communications system may send uplink information in a transport format of the longer of the sTTIs or in a transport format of the shorter of the sTTIs. That the wireless communications system supports at least two shortest uplink retransmission latencies includes that the terminal supports TTI transmission with two different shortest retransmission latencies. The shortest retransmission latency is a shortest time interval from an uplink TTI including a HARQ process to a next uplink TTI including the same HARQ process.

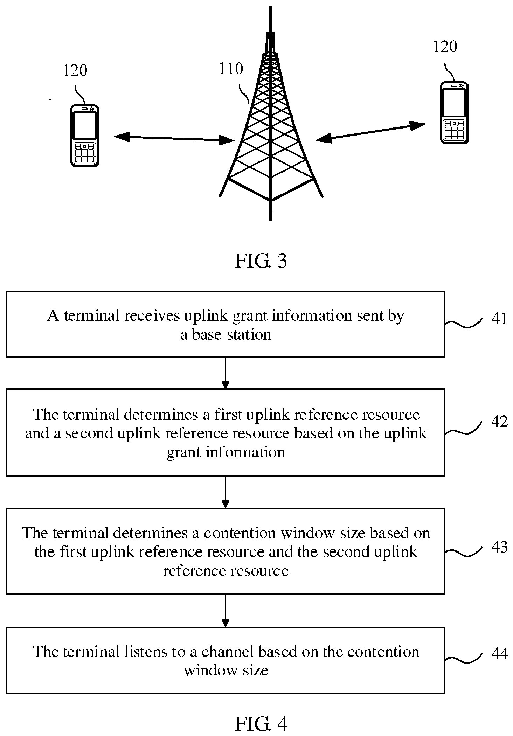

FIG. 3 is a schematic diagram of a communications system to which an embodiment of this application is applied. The communications system may include at least one base station 110 and a plurality of terminals 120 within a coverage area of the base station 110. FIG. 3 shows an example of one base station 110 and two terminals 120. Optionally, the communications system may include a plurality of base stations and a coverage area of each base station may include another quantity of terminals. This is not limited in this embodiment of this application.

Optionally, the wireless communications system may further include other network entities such as a network controller and a mobility management entity. This embodiment of this application is not limited to this.

The communications system to which the embodiments of this application is applied may be a Global System for Mobile Communications (Global System for Mobile Communications, GSM) system, a Code Division Multiple Access (Code Division Multiple Access, CDMA) system, a Wideband Code Division Multiple Access (Wideband Code Division Multiple Access, WCDMA) system, a General Packet Radio Service (General Packet Radio Service, GPRS) system, a Long Term Evolution (Long Term Evolution, LTE) system, an LTE Frequency Division Duplex (Frequency Division Duplex, FDD) system, an LTE Time Division Duplex (Time Division Duplex, TDD) system, a Universal Mobile Telecommunications System (Universal Mobile Telecommunications System, UMTS), another wireless communications system that uses an orthogonal frequency division multiplexing (OFDM) technology, or the like. System architectures and business scenarios described in the embodiments of this application are intended to more clearly describe the technical solutions in the embodiments of this application, but are not intended to limit the technical solutions provided in the embodiments of this application. A person of ordinary skill in the art may know that as the network architectures evolve and a new business scenario emerges, the technical solutions provided in the embodiments of this application further apply to a similar technical problem.

The base station in the embodiments of this application may be configured to provide a wireless communication function for the terminal. The base station may include a macro base station, a micro base station (also referred to as a small cell), a relay station, an access point, or the like in various forms. The base station may be a base transceiver station (Base Transceiver Station, BTS) in the GSM or CDMA, or may be a NodeB (NodeB, NB) in WCDMA, or may be an evolved NodeB (Evolved NodeB, eNB or e-NodeB) in LTE, or may be a corresponding gNB device in a 5G network. For ease of description, in all the embodiments of this application, the foregoing apparatuses that provide the wireless communication function for the terminal are collectively referred to as a base station.

In the embodiments of this application, the terminal may also be referred to as user equipment (User Equipment, UE), a mobile station (Mobile Station, MS), a mobile terminal (Mobile Terminal), a terminal (Terminal), or the like. The terminal may communicate with one or more core networks over a radio access network (Radio Access Network, RAN). For example, the terminal may be a mobile phone (also referred to as a "cellular" phone), a computer with a mobile terminal, or the like. For example, the terminal may be a portable, pocket-sized, handheld, computer built-in, or in-vehicle mobile apparatus, which exchanges voice and/or data with a radio access network. This is not limited in the embodiments of this application.

In the embodiments of this application, "a plurality of' refers to two or more than two. The term "and/or" describes association relationships between associated objects and represents that three relationships may exist. For example, A and/or B may represent the following three cases: Only A exists, both A and B exist, and only B exists. The character "/" usually indicates an "or" relationship between associated objects.

It should be noted that, to better reflect a real-time channel state and more accurately adjust a CWS in a wireless communications system that supports at least two shortest retransmission latencies or TTI lengths, in the embodiments of this application, two different shortest retransmission latencies are used to determine two uplink reference resources, and then the CWS is determined based on the two uplink reference resources. When an eLAA system has two shortest retransmission latencies and the terminal receives receiving states of TBs (or HARQ processes) in the two uplink reference resources, the terminal may compare the two uplink reference resources, and adjust the CWS based on a more recent uplink reference resource, or adjust the CWS based on both the two uplink reference resources, thereby ensuring that a most recent channel state is considered during the CWS adjustment.

Optionally, in the embodiments of this application, the TTI includes a 1-ms TTI or an sTTI, where the sTTI is a TTI shorter than 1 ms in time domain. The TTI is a time domain length corresponding to an uplink data block TB transmitted by the terminal as scheduled by the base station.

For ease of understanding by a person skilled in the art, a decoding latency, a shortest scheduling latency, and a shortest retransmission latency in the embodiments of this application are first explained and described below.

The decoding latency is a shortest time interval from a moment at which the terminal sends an uplink TTI or an uplink subframe that includes a HARQ process to a moment at which the base station demodulates and decodes the HARQ process and uses a UL grant to instruct the HARQ process to perform initial transmission or retransmission. In other words, after receiving the uplink TTI or the uplink subframe, an earliest moment at which the base station can schedule initial transmission or retransmission of the HARQ process in the uplink TTI or the uplink subframe by using the UL grant is after the decoding latency.

The moment at which the base station uses the UL grant to instruct the HARQ process to perform initial transmission or retransmission may be a moment at which the base station sends the UL grant or may be a moment at which the terminal receives the UL grant. Optionally, the moment at which the base station sends the UL grant specifically is a moment at which the base station sends a downlink subframe of the UL grant or sends a downlink TTI (sTTI or 1-ms TTI) of the UL grant or a downlink OFDM symbol carrying the UL grant. Correspondingly, that the terminal receives the UL grant specifically means that the terminal receives the subframe of the UL grant or receives the TTI (sTTI or 1-ms TTI) of the UL grant or receives the downlink OFDM symbol or an uplink symbol of the UL grant.

It should be understood that the decoding latency is the shortest time interval from the moment at which the terminal sends the uplink TTI or the uplink subframe that includes the HARQ process to the moment at which the base station uses the UL grant to instruct the HARQ process to perform initial transmission or retransmission. The moment at which the terminal sends the uplink TTI or the uplink subframe that includes the HARQ process may be a start boundary of the uplink TTI or the uplink subframe, or may be an end boundary of the uplink TTI or the uplink subframe. The moment at which the base station uses the UL grant to instruct the HARQ process to perform initial transmission or retransmission may be a start boundary of a subframe in which the base station sends or the terminal receives the UL grant, or a start boundary of the TTI, or an end boundary of at least one OFDM symbol, or may be a start boundary of a subframe in which the terminal receives the UL grant, or an end boundary of the TTI, or an end boundary of at least one OFDM symbol. For example, for a conventional 1-ms TTI, the decoding latency may be a shortest time interval from a start boundary of the uplink subframe that is sent by the terminal and that includes the HARQ process to a start boundary of a subframe in which the base station sends the UL grant, to be specific, 4 ms; or may be a shortest time interval from an end boundary of the uplink subframe that is sent by the terminal and that includes the HARQ process to a start boundary of a subframe in which the base station sends the UL grant, to be specific, 3 ms.

Optionally, the decoding latency may be reflected as k subframes or k milliseconds, or may be reflected as k sTTIs, or may be reflected as k uplink symbols. In an example, if an sTTI is 2 SSs, the k sTTIs are 2^{∗}k SSs; or if an sTTI is of a 2&3 structure, and the k sTTIs include k1 2-SS sTTIs and (k-k1) 3-SS sTTIs, the k sTTIs are (k1^{∗}2+(k-k1)^{∗}3) SSs.

For example, for the conventional LTE system, a decoding latency is 4 ms. In other words, when the terminal sends a HARQ process in an uplink subframe #n, the terminal can receive, as early as in a subframe #n+4, the UL grant used for scheduling the HARQ process to perform initial transmission or retransmission. However, because that the base station uses the UL grant to instruct the HARQ process to perform initial transmission or retransmission is asynchronous, after decoding the HARQ process, if the base station does not immediately schedule a HARQ ID corresponding to the HARQ process to perform initial transmission or retransmission, an actual time interval from a moment at which the terminal sends an uplink TTI or an uplink subframe that includes a HARQ process, to the moment at which the terminal receives a UL grant that includes a HARQ ID corresponding to the HARQ process is greater than 4 ms. For sTTI transmission, the decoding latency may be shortened to k sTTIs. For example, sTTIs of a 7-SS structure may be 4 sTTIs, in other words, 2 ms.

The shortest scheduling latency is a time interval from a moment at which the base station uses the UL grant to instruct a HARQ process to perform initial transmission or retransmission to a moment at which the terminal sends the HARQ process in the uplink TTI or the uplink subframe. The moment at which the base station uses the UL grant to instruct the HARQ process to perform initial transmission or retransmission may be a moment at which the base station sends the UL grant or may be a moment at which the terminal receives the UL grant. Optionally, that the base station sends the UL grant specifically means that the base station sends a downlink subframe of the UL grant, and that the terminal receives the UL grant specifically means that the terminal receives a subframe of the UL grant.

For example, a shortest scheduling latency for the 1-ms TTI transmission in the conventional LTE system is 4 ms, and a shortest scheduling latency for the sTTI transmission may be shortened to m sTTIs, where m is a positive integer. For example, a shortest scheduling latency for sTTIs of a 7-SS structure may be 4 sTTIs, in other words, 2 ms.

The shortest retransmission latency is a shortest time interval from a moment at which the terminal sends an uplink TTI or an uplink subframe that includes a HARQ process to a moment at which the terminal sends a next uplink TTI or a next uplink subframe that includes the HARQ process. Optionally, the shortest retransmission latency is a sum of the decoding latency and the shortest scheduling latency.

For example, in the conventional LTE system, a shortest retransmission latency is 8 ms. To be specific, when the terminal sends a HARQ process in an uplink subframe #n, the terminal can send, as early as in a subframe #n+8, a HARQ process corresponding to a same HARQ process number. Because that the base station uses the UL grant to instruct the HARQ process to perform initial transmission or retransmission is asynchronous, the retransmission latency may be greater than 8 ms. For sTTI transmission, a shortest retransmission latency may be shortened to (k+m) sTTIs. For example, a shortest retransmission latency of sTTIs of a 7-SS structure may be 8 sTTIs, in other words, 4 ms.

FIG. 4 is a flowchart of Embodiment 1 of a channel listening method according to an embodiment of this application. As shown in FIG. 4, the channel listening method provided in this embodiment of this application includes the following steps.

Step 41: A terminal receives uplink grant information sent by a base station.

Because uplink transmission in an eLAA system is scheduled by the base station, the base station sends the uplink grant information in a downlink control channel, so that the terminal can receive the uplink grant information sent by the base station. It should be understood that the uplink grant information is indication information sent by the base station to the terminal on the downlink control channel, and includes information used to instruct the terminal to initially transmit or retransmit an uplink data channel, a HARQ process, or a TB in a corresponding uplink subframe. In addition, the terminal may further determine, based on the uplink grant information, an uplink reference resource used to adjust a contention window size.

Optionally, the terminal may receive one piece of uplink grant information sent by the base station, or may receive two pieces of uplink grant information sent by the base station. This is not limited herein. In other words, the uplink grant information in this embodiment may include one or two uplink grants. When the uplink grant information includes only one uplink grant, the uplink grant is defined as a first uplink grant in this embodiment. In addition, when the uplink grant information includes two uplink grants, the uplink grants are separately defined as a first uplink grant and a second uplink grant in this embodiment. In other words, the first uplink grant and the second uplink grant in this application are a representation of the uplink grant information. This is not limited in this embodiment of this application.

Step 42: The terminal determines a first uplink reference resource and a second uplink reference resource based on the uplink grant information.

Optionally, in an embodiment, when the uplink grant information includes only the first uplink grant (UL grant), the terminal may determine the first uplink reference resource and the second uplink reference resource based on the first UL grant.

In another embodiment, when the uplink grant information includes the first uplink grant (UL grant) and the second UL grant, the terminal may determine the first uplink reference resource based on the first UL grant, and determine the second uplink reference resource based on the second UL grant.

Step 43: The terminal determines a contention window size based on the first uplink reference resource and the second uplink reference resource.

Specifically, after the terminal determines the first uplink reference resource and the second uplink reference resource, in an implementation, the terminal may select either the first uplink reference resource or the second uplink reference resource as a target reference resource, and then adjust the contention window size based on a receiving state of at least one HARQ process in the target reference resource, to determine a best contention window size; in another implementation, the terminal adjusts the contention window size based on a receiving state of at least one HARQ process in each of the first uplink reference resource and the second uplink reference resource, to determine a best contention window size.

Step 44: The terminal listens to a channel based on the contention window size.

The terminal listens to the channel based on the determined contention window size CWS. Optionally, a channel listening manner is CCA in random backoff. For a specific procedure, refer to the foregoing description. Details are not described herein again.

According to the channel listening method provided in this embodiment of this application, the terminal receives the uplink grant information sent by the base station; determines the first uplink reference resource and the second uplink reference resource based on the uplink grant information; determines the contention window size based on the first uplink reference resource and the second uplink reference resource; and listens to the channel based on the determined contention window size. Different from the prior art, the terminal determines two uplink reference resources based on the uplink grant information and adjusts and determines the contention window size based on the two reference resources. In this way, a real-time channel state can be accurately reflected, so that a probability of a collision between nodes can be reduced, and a channel access opportunity is increased.

It should be understood that the terminal adjusts and determines the contention window size based on the two reference resources. The terminal may compare the two uplink reference resources and adjust the CWS based on the more recent of the uplink reference resources, or may adjust the CWS based on the two uplink reference resources.

Optionally, in an example, in the channel listening method provided in this embodiment, the uplink grant information includes a first uplink grant.

Correspondingly, step 12 (the terminal determines a first uplink reference resource and a second uplink reference resource based on the uplink grant information) may be implemented by using the following steps:
The terminal determines the first uplink reference resource and the second uplink reference resource based on the first uplink grant.

In this embodiment, the terminal may determine the first uplink reference resource and the second uplink reference resource based on the first UL grant. In other words, the terminal determines two different uplink reference resources based on a same UL grant.

Optionally, that the terminal determines the first uplink reference resource based on the first UL grant may be implemented in the following possible manner: Specifically, the terminal determines an uplink time-domain resource included in a most recent first uplink burst before the first moment, and uses the uplink time-domain resource as the first uplink reference resource. The uplink time-domain resource may be an initial uplink subframe, an initial TTI, or an initial first uplink data channel in the first uplink burst.

The first uplink burst is a string of consecutive uplink subframes or TTIs. That two subframes (or two TTIs) are consecutive may include that the two subframes (or two TTIs) are continuous in time domain, without any idle time interval between the subframes (or TTIs); or that the two subframes have continuous subframe numbers, with an idle time interval between the two subframes, or the two TTIs have continuous TTI numbers, with an idle time interval between the two TTIs. If the first uplink burst is a string of consecutive uplink TTIs, the uplink TTIs may be the same or different in length.

Further, if the first moment is included in an uplink burst, the first uplink reference resource is an initial uplink subframe, an initial TTI, or an initial first uplink data channel in the uplink burst. Optionally, the initial uplink subframe, the initial TTI, or the initial first uplink data channel is an uplink subframe, a TTI, or a first uplink data channel in which the terminal occupies a channel to send an uplink shared channel (Uplink Shared Channel, UL-SCH).

A subframe, a TTI, or an uplink data channel that the base station schedules the terminal to send but the terminal fails to send (for example, because the terminal fails to access a channel before the subframe due to an LBT failure) is ignored, and is not used as the first uplink reference resource. Optionally, the first uplink burst, the first uplink subframe, the first TTI, or the No. 1 first uplink data channel is sent by the terminal after accessing a channel through random backoff CCA. If the terminal sends the initial uplink subframe, the initial TTI, or the initial uplink data channel after accessing a channel in another LBT manner, the initial uplink subframe, the initial TTI, or the initial first uplink data channel is not used as the first uplink reference resource.

Similarly, that the terminal determines the second uplink reference resource based on the first UL grant includes that the terminal determines an uplink resource in a most recent second uplink burst before the second moment, and uses the uplink resource as the second uplink reference resource. The uplink resource may be an initial uplink subframe, an initial TTI, or an initial second uplink data channel in the second uplink burst. This method is similar to the method in which the terminal determines the first uplink reference resource based on the first UL grant. A definition of the second uplink burst is similar to a definition of the first uplink burst. Details are not described herein again.

Optionally, the first uplink burst and the second uplink burst are different uplink bursts. Considering that an initial uplink subframe in an uplink burst can be of only one type of TTI length, for example, can only be of a 1-ms TTI structure or can only be of an sTTI structure, and if the initial uplink subframe is of the sTTI structure, the initial uplink subframe can be of an sTTI length in only one structure, an initial subframe in one uplink burst cannot include both a 1-ms TTI and an sTTI, and cannot include two types of sTTIs of different lengths. Therefore, the first uplink reference resource and the second uplink reference resource that are selected by the terminal are located in different uplink bursts.

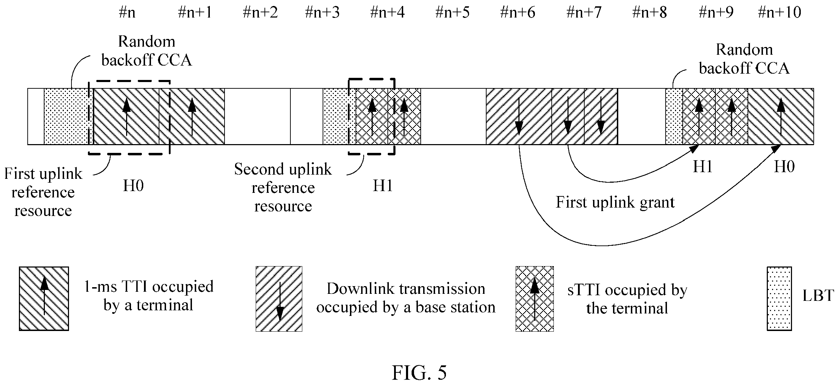

FIG. 5 is a schematic diagram of determining, by a terminal, a first uplink reference resource and a second uplink reference resource based on a first uplink grant according to an embodiment of this application. As shown in FIG. 5, it is assumed that a base station sends, on a downlink control channel, a UL grant 1 in a subframe #n+6 to schedule a HARQ process H0 (1-ms TTI) in a subframe #n to perform initial transmission or retransmission in a subframe #n+10, and the base station sends, on a downlink control channel, a UL grant 2 in a subframe #n+7 to schedule a HARQ process H1 (7-SS sTTI) in a subframe #n+4 to perform initial transmission or retransmission in a subframe #n+9. In this case, a first preset time interval is 4 ms, and a second preset time interval is 4 sTTIs. Because the UL grant 1 is earlier than the UL grant 2, the terminal uses the more recent UL grant 2 as a first UL grant, determines that a first uplink reference resource is an initial uplink subframe #n in a most recent uplink burst that is 3 ms before the downlink subframe #n+7 in which the base station sends the UL grant 2, and determines that a second uplink reference resource is an initial uplink sTTI (an initial sTTI of the #n+4) in a most recent uplink burst 3 ms sTTI before the downlink subframe #n+7 in which the base station sends the UL grant 2.

It should be noted that the terminal listens to the channel based on a determined CWS, accesses a channel after an idle channel is found through listening, and sends a new uplink burst. The first UL grant used for determining the first uplink reference resource and the second uplink reference resource may be a UL grant used for scheduling at least one uplink subframe or TTI in the new uplink burst, or may not be used to schedule any one or more uplink subframes or TTIs in the new uplink burst (in other words, a UL grant used for scheduling at least one uplink subframe or TTI in an uplink burst other than the new uplink burst). In other words, the terminal may determine an uplink reference resource based on the UL grant used for scheduling an uplink subframe or a TTI in the new uplink burst, or may determine an uplink reference resource based on another UL grant, for example, a less recent or more recent UL grant.

Further, in this embodiment of this application, the first uplink reference resource is earlier than the first uplink grant, a time interval between the first uplink reference resource and the first uplink grant is greater than or equal to a first preset time interval, the second uplink reference resource is earlier than the first uplink grant, a time interval between the second uplink reference resource and the first uplink grant is greater than or equal to a second preset time interval, and the first preset time interval is greater than the second preset time interval.

Optionally, the first preset time interval and the second preset time interval are first explained and described below, and in this embodiment of this application, the first preset time interval is greater than the second preset time interval. The first preset time interval is a shortest time interval between the first uplink reference resource and a first reference uplink grant, and the second preset time interval is a shortest time interval between the second uplink reference resource and a second reference uplink grant. The first preset time interval may correspond to a decoding latency of an uplink channel or a TB in the first uplink reference resource, in other words, a shortest time interval from a moment at which the terminal sends an uplink TTI or an uplink subframe (the first uplink reference resource) that includes a HARQ process to a moment at which the base station uses a UL grant (the first reference uplink grant) to instruct the HARQ process to perform initial transmission or retransmission. Details are not described herein again. The second preset time interval may correspond to a decoding latency of an uplink channel or a TB in the second uplink reference resource. Details are not described herein again. The decoding latency of the uplink channel or the TB in the second uplink reference resource is less than the decoding latency of the uplink channel or the TB in the first uplink reference resource. Therefore, the first preset time interval is greater than the second preset time interval.

It should be understood that the shortest time interval between the first uplink reference resource and the first reference uplink grant is not a time interval from the first uplink reference resource to the first reference uplink grant in a specific transmission, but is a shortest time interval from the first uplink reference resource to the first reference uplink grant that may be achieved based on a decoding capability of the base station. The decoding capability or the decoding latency may be predefined. Therefore, further, the first preset time interval is predefined, and the second preset time interval is predefined. Due to a factor such as a scheduling algorithm of the base station or channel contention in LBT, in a specific transmission, a time interval from the first uplink reference resource to an uplink grant used by the base station to actually schedule the terminal to perform initial transmission or retransmission based on at least one HARQ process in the first uplink reference resource may be greater than the first preset time interval; and similarly, a time interval from the second uplink reference resource to an uplink grant used by the base station to actually schedule the terminal to perform initial transmission or retransmission based on at least one HARQ process in the second uplink reference resource may be greater than the second preset time interval.

The first reference uplink grant is an uplink grant used by the base station to schedule the terminal to perform initial transmission or retransmission based on at least one HARQ process in the first uplink reference resource, and the second reference uplink grant is an uplink grant used by the base station to schedule the terminal to perform initial transmission or retransmission based on at least one HARQ process in the second uplink reference resource.

Actually, an initial TTI corresponding to the first uplink reference resource may be a 1-ms TTI or an sTTI. It can be learned from the foregoing analysis that the terminal determines an uplink time-domain resource included in a most recent first uplink burst before the first moment, and uses the uplink time-domain resource as the first uplink reference resource.

In this embodiment of this application, the first moment is earlier than the first UL grant, and a time interval between the first moment and the first UL grant is the first preset time interval, the first preset time interval minus 1 ms, or the first preset time interval minus 1 sTTI. Specifically, the time interval between the first moment and the first UL grant may be a time interval between the first moment and a moment at which the base station sends the first UL grant, or may be a time interval between the first moment and a moment at which the terminal receives the first UL grant. Optionally, that the base station sends the first UL grant includes that the base station sends a downlink subframe of the first UL grant, and that the terminal receives the first UL grant includes that the terminal receives a subframe of the first UL grant, a TTI (an sTTI or a 1-ms TTI) of the first UL grant, or an uplink symbol of the first UL grant.

For example, if the first preset time interval is 3 ms (for example, the decoding latency is 4 ms, and the first preset time interval is the decoding latency minus 1 ms; or the decoding latency is 3 ms, and the first preset time interval is the decoding latency), the time interval between the first moment and the first UL grant is the first preset time interval, and the base station sends the first UL grant in a downlink subframe #n, the first moment is a subframe #n-3. If the first preset time interval is 3 ms, and the terminal receives and detects the first UL grant in a downlink subframe #n+1, the first moment is a subframe #n-2. For example, if the first preset time interval is 3 sTTIs (for example, the decoding latency is 4 sTTI, and the first preset time interval is the decoding latency minus 1 sTTI; or the decoding latency is 3 sTTI, and the first preset time interval is the decoding latency), and the base station sends the first UL grant in a downlink sTTI #p, the first moment is an sTTI #p-3. If the first preset time interval is 4 ms (for example, the decoding latency is 4 ms, and the first preset time interval is the decoding latency), the time interval between the first moment and the first UL grant is the first preset time interval minus 1 ms, and the base station sends the first UL grant in a downlink subframe #n, the first moment is a subframe #n-3.

In this embodiment of this application, the second moment is earlier than the first UL grant, and a time interval between the second moment and the first UL grant is the second preset time interval, the second preset time interval minus 1 ms, or the second preset time interval minus 1 sTTI. A definition of the time interval between the second moment and the first UL grant is similar to a definition of the time interval between the first moment and the first UL grant. Details are not described herein again.

Optionally, that the first uplink reference resource is earlier than the first uplink grant includes that an end moment of the first uplink reference resource is earlier than a moment at which the terminal receives the first UL grant, a subframe corresponding to a moment at which the terminal receives the UL grant, or a downlink subframe in which the base station sends the UL grant.

For example, the first uplink reference resource is an uplink subframe #n, the first UL grant sent by a base station (Evolved NodeB, eNB) is carried in a physical downlink control channel (Physical Downlink Control Channel, PDCCH) of a downlink subframe #n+4, and the terminal receives the first UL grant in a subframe #n+5. Therefore, the first UL grant is later than the first uplink reference resource. That the second uplink reference resource is earlier than the first uplink grant is similar to this. Details are not described herein again.

It may be understood that when the terminal determines two uplink reference resources based on the first UL grant and an included data channel or a length of a TTI of one uplink reference resource is different from an included data channel or a TTI length in time domain of the other uplink reference resource (a first time-domain resource length is unequal to a second time-domain resource length), because the first UL grant can be used to schedule only uplink channels or TBs corresponding to a same TTI length or a same decoding latency, but cannot simultaneously schedule uplink channels or TBs corresponding to two different TTI lengths or two decoding latencies, when the terminal is to determine, based on the first UL grant, an uplink reference resource corresponding to the other TTI length or the other decoding latency, the terminal may directly determine the uplink reference resource based on the first UL grant and the decoding latency corresponding to the other TTI length or the other decoding latency. In this way, a length of one TTI scheduled by using the first UL grant does not need to be the same as a length of the other TTI, or a decoding latency corresponding to one TTI scheduled by using the first UL grant does not need to be the same as the other decoding latency. Further, when the first UL grant is used for scheduling an uplink channel or a TB corresponding to a 1-ms TTI length, the terminal determines the first uplink reference resource based on the first UL grant and a decoding latency corresponding to the 1-ms TTI, and may further determine the second uplink reference resource based on an sTTI (even when no UL grant used for scheduling the sTTI is included in the sTTI) included in a subframe in which the first UL grant is located and a decoding latency of the sTTI. Further, the sTTI included in the subframe in which the first UL grant is located may be an sTTI in which the first UL grant is located or may be another sTTI in the subframe in which the first UL grant is located. When the first UL grant is used for scheduling an uplink channel or a TB corresponding to an sTTI length, the terminal determines the second uplink reference resource based on the first UL grant and a decoding latency corresponding to the sTTI, and may further determine the first uplink reference resource based on a subframe in which the first UL grant is located (even when no UL grant used for scheduling a 1-ms TTI is included in the subframe) and a decoding latency of the 1-ms TTI.

For example, when the terminal is to determine, based on a first UL grant used for scheduling a 1-ms TTI, a second uplink reference resource that includes an sTTI, the terminal may determine that the second uplink reference resource is an uplink resource in a most recent second uplink burst before the second moment based on a downlink sTTI (a UL grant used for scheduling an uplink sTTI may be included in the downlink sTTI) in the downlink subframe in which the first UL grant is located, but not based on the downlink subframe in which the first UL grant is located.

When the terminal is to determine, based on a first UL grant used for scheduling an sTTI, a first uplink reference resource that includes a 1-ms TTI, the terminal may determine that the first uplink reference resource is an uplink resource in a most recent first uplink burst before the first moment based on the downlink subframe (a UL grant used for scheduling an uplink 1-ms TTI may be included in a PDCCH area of the downlink subframe) in which the first UL grant is located, but not based on a downlink sTTI in which the UL grant is located.

In an example, when a first time-domain resource length is unequal to a second time-domain resource length, the first UL grant may be used to schedule an uplink data channel corresponding to the first time-domain resource length or may be used to schedule an uplink data channel corresponding to the second time-domain resource length. For example, the first UL grant may schedule the terminal to send data information in a data channel corresponding to an sTTI, or may schedule the terminal to send data information in a data channel corresponding to a 1-ms TTI.

It should be understood that the first UL grant may be used to schedule the terminal to perform initial transmission or retransmission based on a HARQ process or a TB in an uplink data channel corresponding to the first time-domain resource length, or may be used to schedule the terminal to perform initial transmission or retransmission based on a HARQ process or a TB in an uplink data channel corresponding to the second time-domain resource length. The uplink data channel used to carry the initial transmission or the retransmission of the HARQ process or the TB may correspond to the first time-domain resource length or the second time-domain resource length. For example, the first UL grant may be a UL grant used for scheduling the terminal to perform retransmission based on an sTTI, or may be a UL grant used for scheduling the terminal to perform retransmission based on a 1-ms TTI. A TTI used for carrying the retransmission of the sTTI or the 1-ms TTI may be an sTTI or a 1-ms TTI.

Optionally, in another example, in the channel listening method provided in this embodiment, the uplink grant information includes a first uplink grant and a second uplink grant.

Correspondingly, step 12 (the terminal determines a first uplink reference resource and a second uplink reference resource based on the uplink grant information) may be implemented using the following steps:
The terminal determines the first uplink reference resource based on the first uplink grant and determines the second uplink reference resource based on the second uplink grant.

Optionally, the terminal determines the first uplink reference resource based on the first UL grant and determines the second uplink reference resource based on the second UL grant, and the second UL grant and the first UL grant are different and are separately located in different downlink TTIs or located in different downlink subframes. Further, the technical solution in this embodiment of this application does not include jointly determining a reference resource by using two UL grants.

In this embodiment of this application, the second moment is earlier than the second UL grant, and a time interval between the second moment and the second UL grant is the second preset time interval, the second preset time interval minus 1 ms, or the second preset time interval minus 1 sTTI. A definition of the time interval between the second moment and the second UL grant is similar to a definition of the time interval between the second moment and the first UL grant. Details are not described herein again.

It may be understood that when a first time-domain resource length is unequal to a second time-domain resource length or a first preset time interval is unequal to a second preset time interval, the first UL grant is used for scheduling an uplink data channel, HARQ process, or transport block, the uplink data channel, HARQ process, or transport block corresponds to the first time-domain resource length or the first preset time interval, the second UL grant is used for scheduling another uplink data channel, HARQ process, or transport block, the another uplink data channel, HARQ process, or transport block corresponds to the second time-domain resource length or the second preset time interval.

Optionally, the first UL grant is used for scheduling a first uplink data channel, HARQ process, or transport block, and the first uplink data channel, HARQ process, or transport block is used for performing initial transmission or retransmission based on a previous uplink data channel, HARQ process, or transport block. In addition, the previous uplink data channel, HARQ process, or transport block corresponds to the first time-domain resource length or the first preset time interval. The second UL grant is used for scheduling a second uplink data channel, HARQ process, or transport block, and the second uplink data channel, HARQ process, or transport block is different from the first uplink data channel, HARQ process, or transport block and is used for performing initial transmission or retransmission based on a previous uplink data channel, HARQ process, or transport block. The previous uplink data channel, HARQ process, or transport block corresponds to the second time-domain resource length or the second preset time interval.

Considering that a first UL grant used for scheduling a 1-ms TTI and a second UL grant used for scheduling an sTTI may be located at different moments of a downlink subframe, and a priority of an uplink service to be scheduled by the first UL grant corresponding to the 1-ms TTI is different from a priority of an uplink service to be scheduled by the second UL grant corresponding to the sTTI, the base station may be able to send only one UL grant, but unable to immediately send two UL grants at the same time. In this case, two uplink reference resources (a TTI length or a decoding latency of one uplink reference resource does not match a resource scheduled by using the UL grant) are not determined by using a same UL grant. Instead, two uplink reference resources are separately determined by selecting two different UL grants (the two UL grants correspond to different TTI lengths or decoding latencies).

For example, a first UL grant used for scheduling a 1-ms TTI is located in an earlier PDCCH area, and a second UL grant used for scheduling an sTTI may be located in a later sPDCCH area. Therefore, if the base station occupies a channel in the middle of a subframe through contention, the base station can send, at a time, only the second UL grant used for scheduling the sTTI, use only the second UL grant to determine a second uplink reference resource corresponding to the sTTI, and use the other first UL grant used for scheduling the 1-ms TTI to determine a first uplink reference resource corresponding to the 1-ms TTI.

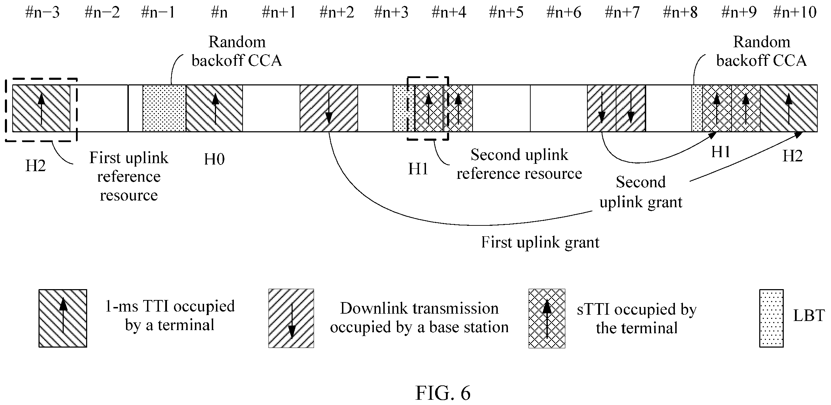

FIG. 6 is a schematic diagram of determining, by a terminal, a first uplink reference resource based on a first uplink grant, and determining a second uplink reference resource based on a second uplink grant according to an embodiment of this application. As shown in FIG. 6, it is assumed that a base station schedules, by using a UL grant 1 a downlink control channel in a subframe #n+2, a HARQ process H2 (1-ms TTI) in a subframe #n to perform initial transmission or retransmission in a subframe #n+10, and the base station schedules, by using a UL grant 2 a downlink control channel in a subframe #n+7, a HARQ process H1 (7-SS sTTI) in a subframe #n+4 to perform initial transmission or retransmission in a subframe #n+9, a first preset time interval is 4 ms, and a second preset time interval is 4 sTTIs. In this embodiment, the UL grant 1 is the first UL grant, and the UL grant 2 is the second UL grant. Therefore, the terminal determines, based on the first UL grant used for scheduling the 1-ms TTI, that a first moment is 3 ms before the downlink subframe #n+2 in which the UL grant 1 is located (the first preset time interval minus 1 ms), in other words, a subframe #n-2; determines that the first uplink reference resource (corresponding to the 1-ms TTI) is an initial uplink subframe #n-3 in a most recent first uplink burst before the first moment; determines, based on the second UL grant used for scheduling the sTTI, that a second moment is 3 sTTIs before a downlink sTTI in which the UL grant 2 is located, in other words, a second sTTI of a subframe #n+5 (it is assumed that the #n+5 is of a 7-SS structure); and determines that the second uplink reference resource (corresponding to the sTTI or a subframe that includes the sTTI) is an initial uplink sTTI (an initial sTTI in the #n+4) or an uplink subframe #n+4 that includes the sTTI, in a most recent uplink burst before the second sTTI of the subframe #n+5.

It should be noted that the terminal listens to the channel based on a determined CWS, accesses a channel after the channel listening is successful, and sends a new uplink burst. The first UL grant used for determining the first uplink reference resource and the second UL grant used for determining the second uplink reference resource may be UL grants used for scheduling at least one uplink subframe or TTI in the new uplink burst, or may not be used for scheduling any one or more uplink subframes or TTIs in the new uplink burst. In other words, the terminal may determine an uplink reference resource based on the UL grant used for scheduling an uplink subframe or a TTI in the new uplink burst, or may determine an uplink reference resource based on another UL grant, for example, a less recent or more recent UL grant.

Further, in this embodiment of this application, the first uplink reference resource is earlier than the first uplink grant, a time interval between the first uplink reference resource and the first uplink grant is greater than or equal to a first preset time interval, the second uplink reference resource is earlier than the second uplink grant, a time interval between the second uplink reference resource and the second uplink grant is greater than or equal to a second preset time interval, and the first preset time interval is greater than the second preset time interval.

Optionally, in this embodiment of this application, it is assumed that a first preset time interval is greater than a second preset time interval. The first preset time interval is a shortest time interval between the first uplink reference resource and a first reference uplink grant, and the second preset time interval is a shortest time interval between the second uplink reference resource and a second reference uplink grant. The first reference uplink grant is an uplink grant used by the base station to schedule the terminal to perform initial transmission or retransmission based on at least one HARQ process in the first uplink reference resource, and the second reference uplink grant is an uplink grant used by the base station to schedule the terminal to perform initial transmission or retransmission based on at least one HARQ process in the second uplink reference resource. Therefore, a time interval between the first uplink reference resource and the first uplink grant is greater than or equal to the first preset time interval, and a time interval between the second uplink reference resource and the second uplink grant is greater than or equal to the second preset time interval.

Further, because a decoding latency, a shortest scheduling latency, and a shortest retransmission latency corresponding to a 1-ms TTI are respectively greater than a decoding latency, a shortest scheduling latency, and a shortest retransmission latency corresponding to an sTTI, if the first uplink grant is a UL grant used for scheduling the 1-ms TTI and the second uplink grant is a UL grant used for scheduling the sTTI, a first preset time interval is greater than a second preset time interval.

In this embodiment of this application, that the first uplink reference resource is earlier than the first uplink grant includes that an end moment of the first uplink reference resource is earlier than a moment at which the terminal receives the first UL grant, a subframe or a TTI corresponding to a moment at which the terminal receives the first UL grant, or a downlink subframe or a TTI in which the base station sends the first UL grant. That the second uplink reference resource is earlier than the second uplink grant includes that an end moment of the second uplink reference resource is earlier than a moment at which the terminal receives the second UL grant or a subframe or a TTI corresponding to a moment at which the terminal receives the second UL grant.

Based on any one of the foregoing embodiments, step 43 (The terminal determines a contention window size based on the first uplink reference resource and the second uplink reference resource) may be implemented in the following two possible implementations. For details, refer to the following embodiments.

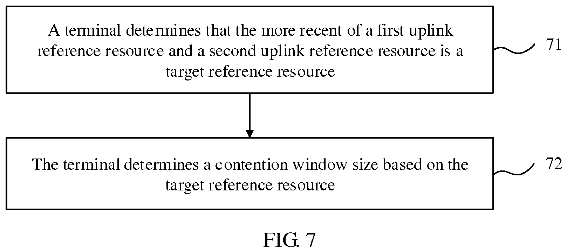

In a possible implementation, FIG. 7 is a flowchart of Embodiment 2 of a channel listening method according to an embodiment of this application. As shown in FIG. 7, in the channel listening method provided in this embodiment of this application, step 43 (The terminal determines a contention window size based on the first uplink reference resource and the second uplink reference resource) includes the following steps:
Step 71: The terminal determines that the more recent of the first uplink reference resource and the second uplink reference resource is a target reference resource.
Step 72: The terminal determines the contention window size based on the target reference resource.

In an example, the terminal first determines the target reference resource from the first uplink reference resource and the second uplink reference resource, and then determines the contention window size based on only the target reference resource.

Specifically, when both the first uplink reference resource and the second uplink reference resource are determined by using the first UL grant, of the first uplink reference resource and the second uplink reference resource, a reference resource closer to the first UL grant is the target reference resource. When the first uplink reference resource is determined based on the first UL grant and the second uplink reference resource is determined based on the second UL grant, of the first uplink reference resource and the second uplink reference resource, a reference resource closer to the more recent of the first UL grant and the second UL grant is the target reference resource. In other words, a more recent reference resource is selected as the target reference resource, and then the CWS is adjusted based on the target reference resource, to be specific, based on whether a receiving state of a HARQ process (or TB) in the target reference resource is received or based on a received receiving state (acknowledgement or negative acknowledgement) of a HARQ process (or TB) in the target reference resource, to determine a best CWS.

It may be understood that the terminal does not directly adjust the CWS based on whether a receiving state of a HARQ process (or TB) in each of the two uplink reference resources is received or based on a receiving state of a HARQ process (or TB) in each of the two uplink reference resources; instead, one of the two uplink reference resources is determined as the target reference resource based on a chronological order of the two uplink reference resources, and then the CWS is determined based on a receiving state of a HARQ process (or TB) in the target reference resource.

Optionally, that the target reference resource is the more recent of the first uplink reference resource and the second uplink reference resource includes that a TTI or a subframe corresponding to the target reference resource is later than a TTI or a subframe corresponding to the other uplink reference resource.

According to the channel listening method provided in this embodiment of this application, when the terminal is to determine the contention window size based on the first uplink reference resource and the second uplink reference resource, the terminal first determines that the target reference resource is the more recent of the first uplink reference resource and the second uplink reference resource, and then only needs to determine the contention window size based on the target reference resource. Because the target reference resource is the more recent reference resource, the target reference resource can accurately reflect a real-time channel state, and then an accurate contention window size can be determined.

Further, in an embodiment, shortest retransmission latencies or decoding latencies of two uplink data channels (or TTIs) are different. Specifically, two possible cases are included.

In a first case, the two uplink data channels correspond to a same TTI length (for example, a 1-ms TTI). However, the base station and the terminal have a higher capability of processing an initial TTI, and processing the initial TTI can achieve a shorter retransmission latency or decoding latency compared with processing a second TTI. Therefore, the terminal obtains a receiving state of (a TB or a HARQ process in) the initial TTI before obtaining a receiving state of (a TB or a HARQ process in) the second TTI. For example, both the two uplink data channels correspond to a 1-ms TTI, a decoding latency corresponding to a first uplink data channel is 4 ms, and a decoding latency corresponding to a second uplink data channel is 3 ms.

In a second case, the two uplink data channels correspond to different TTI lengths. A length of an sTTI corresponding to one uplink data channel (for example, a second uplink data channel) is shorter than a length of a 1-ms TTI or an sTTI corresponding to the other uplink data channel (for example, a first uplink data channel). Because a retransmission latency or a decoding latency of the shorter sTTI is shorter, the terminal obtains a receiving state of (a TB block or a HARQ process in) the shorter sTTI before obtaining a receiving state of (a TB or a HARQ process in) the 1-ms TTI or the longer sTTI.

It should be understood that in both cases, a first preset time interval is greater than a second preset time interval, where the first preset time interval corresponds to a decoding latency (or a decoding latency minus 1 ms, or a decoding latency minus 1 sTTI) of the first uplink reference resource, and the second preset time interval corresponds to a decoding latency (or a decoding latency minus 1 ms, or a decoding latency minus 1 sTTI) of the second uplink reference resource. Considering that decoding latencies of the two types of TTIs are different, a receiving state of a TTI with a shorter decoding latency may be obtained earlier, but uplink scheduling performed by the base station for two types of TTIs is flexible, a TTI in the second uplink reference resource with the shorter decoding latency may be sent earlier than a TTI in the first uplink reference resource with the longer decoding latency or may be sent later than a TTI in the first uplink reference resource with the longer decoding latency. Therefore, the CWS needs to be jointly determined based on the two uplink reference resources.

For example, the first uplink reference resource and the second uplink reference resource are compared, and the CWS is determined based on the more recent uplink reference resource or an uplink reference resource closer to a current moment, but not determined fixedly based on an uplink reference resource with a shorter decoding latency.

As shown in FIG. 5, the terminal is scheduled to send the HARQ process H0 in the subframe #n and send the HARQ process H1 in the subframe #n+4, and the base station uses a UL grant to schedule the terminal to initially transmit or retransmit the HARQ process H1 in the subframe #n+9 and the HARQ process H0 in the subframe #n+10. Therefore, it may be determined that the first uplink reference resource is the subframe #n and the second uplink reference resource is the subframe #n+4 or an initial sTTI in the subframe #n+4. Because the first uplink reference resource is earlier than the second uplink reference resource, the CWS may be adjusted based on the second uplink reference resource.

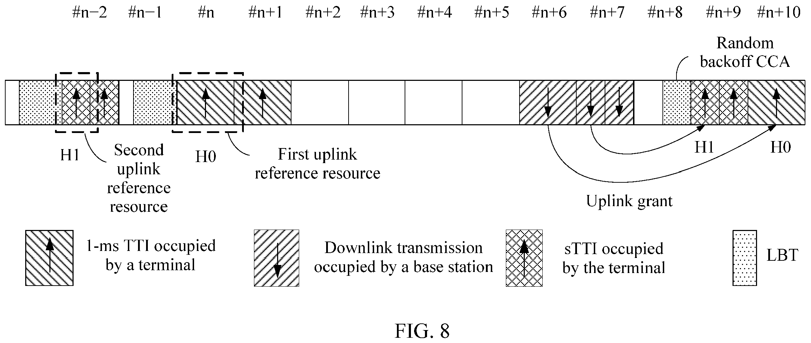

In another embodiment, FIG. 8 is a schematic diagram of a case in which a second uplink reference resource is earlier than a first uplink reference resource. As shown in FIG. 8, if the first uplink reference resource is a subframe #n, and the second uplink reference resource is a subframe #n-2 or an initial sTTI in a subframe #n-2 and is earlier than the first uplink reference resource, the first uplink reference resource may be used to adjust a CWS.

Further, based on the embodiment shown in FIG. 7, in an embodiment, step 72 (The terminal determines the contention window size based on the target reference resource) includes the following step:
The terminal decreases the contention window size when the terminal receives that a receiving state of at least one HARQ process in the target reference resource is acknowledgement; or the terminal decreases the contention window size when the terminal receives a receiving state of at least one HARQ process in the target reference resource and a receiving state of at least one of the HARQ processes whose receiving states are received is acknowledgement.

After the target reference resource is determined, a step of determining, by the terminal, the CWS based on the target reference resource is similar to a prior-art step of determining the CWS based on an uplink reference subframe.

Specifically, if a receiving state of at least one HARQ process included in the target reference resource is acknowledgement, the CWS is to be decreased. For example, if an original CWS is 31, an adjusted CWS is a smallest value for services of a same priority. For example, when a priority class (priority class) is equal to 3, the CWS is 15.

That a receiving state of at least one HARQ process is acknowledgement includes that an NDI of a TB or a HARQ process corresponding to at least one HARQ process number is a "toggled" state; in other words, the base station instructs the terminal to initially transmit the HARQ process or use the HARQ process number to transmit new data.

Further, based on the embodiment shown in FIG. 7, in another embodiment, step 72 (The terminal determines the contention window size based on the target reference resource) includes the following step:
The terminal increases the contention window size when a receiving state, which is received by the terminal, of each of at least one HARQ process in the target reference resource is negative acknowledgement, or when the terminal receives no receiving state of any HARQ process in the target reference resource.

In an example, the terminal receives a receiving state, which is indicated by the base station, of each of at least one HARQ process or TB in the target reference resource, but the receiving state of each of the at least one HARQ process or TB is negative acknowledgement; in other words, an NDI corresponding to each of the at least one HARQ process or TB is a "toggled" state, that is, the base station instructs to retransmit the HARQ processes or TBs. In this case, the terminal increases the contention window size.

In another example, the terminal receives no receiving state, which is indicated by the base station, of any HARQ process in the target reference resource; in other words, after the uplink reference resource is received, no instruction to perform initial transmission or retransmission based on any HARQ process included in the target reference resource is received from the base station again. The uplink reference resource is obtained through calculation based on uplink grant information and a decoding latency, in other words, when the base station sends the uplink grant information or the terminal receives the uplink grant information, the base station knows the receiving state of a HARQ process or a TB in the uplink reference resource, but does not immediately schedule the HARQ process in the uplink reference resource to perform initial transmission or retransmission. Therefore, the terminal also increases the CWS when no uplink grant information is obtained.

It may be understood that the terminal receives or receives no receiving state, which is indicated by the base station, of at least one HARQ process or TB in the target reference resource is within a time interval between a moment at which the target reference resource is received (not including the moment at which the target reference resource is received) and a moment or a subframe (including the moment or the subframe of the UL grant) in which the base station sends or the terminal receives the uplink grant information (used for determining the uplink reference resource).

Optionally, that the terminal increases the contention window size is based on an existing CWS value. For example, if an existing CWS is N, an adjusted CWS value is 2^{∗}N-1.

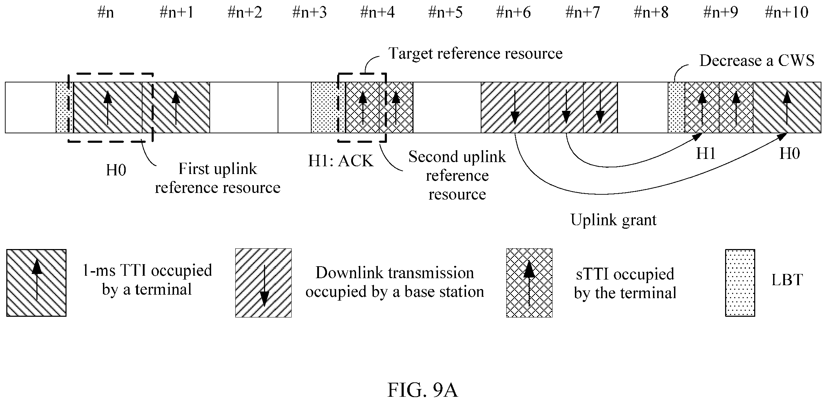

FIG. 9A to FIG. 9D are schematic diagrams of determining, by a terminal, a contention window size based on a target reference resource in the embodiment shown in FIG. 7.

Optionally, as shown in FIG. 9A, it is assumed that a base station sends, on a downlink control channel, a UL grant 1 in a subframe #n+6 to schedule a HARQ process H0 (1-ms TTI) in a subframe #n to perform initial transmission or retransmission in a subframe #n+10, and the base station sends, on a downlink control channel, a UL grant 2 in a subframe #n+7 to schedule a HARQ process H1 (7-SS sTTI) in a subframe #n+4 to perform initial transmission in a subframe #n+9, and determines that the subframe #n+4 is a target reference resource. Because a receiving state of the HARQ process H1 is acknowledgement ACK, the terminal decreases a CWS.

A first preset time interval corresponding to 1-ms TTI transmission is 4 ms, and a second preset time interval corresponding to 7-SS sTTI transmission is 4 sTTIs. Because the UL grant 2 is later than the UL grant 1, the terminal determines a first uplink reference resource and a second uplink reference resource based on the more recent UL grant 2. A first moment is 3 ms before the downlink subframe #n+7 in which the base station sends the UL grant 2 (the first preset time interval minus 1 ms), in other words, the subframe #n+4. The first uplink reference resource is an initial uplink subframe #n in a most recent uplink burst before the first moment. A second moment is 3 sTTIs before a downlink sTTI in which the base station sends the UL grant 2 (the second preset time interval minus 1 sTTI), in other words, a second sTTI in a subframe #n+5 (it is assumed that the #n+5 is of a 7-SS structure). The second uplink reference resource is an initial uplink sTTI (an initial sTTI in the #n+4) in a most recent uplink burst before the second moment.

The terminal selects, from the first uplink reference resource and the second reference resource, the more recent second uplink reference resource as the target reference resource. Because the receiving state of the HARQ process H1 in the target reference resource is correct acknowledgement ACK, the terminal decreases a CWS for the #n+9 and the #n+10 in an uplink burst.

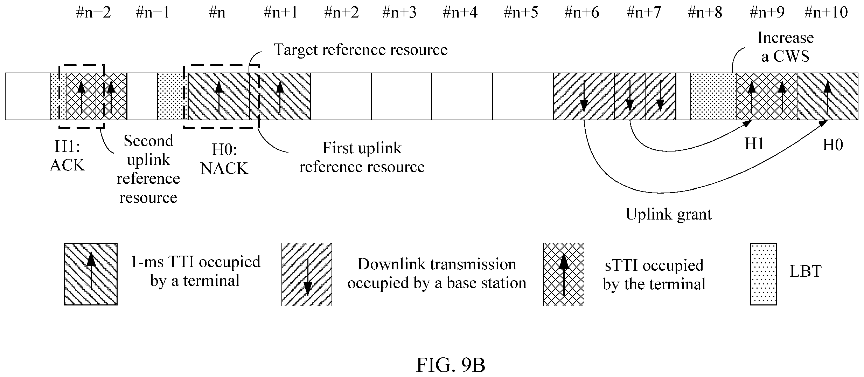

As shown in FIG. 9B, a difference from FIG. 9A is that a UL grant 2 schedules a HARQ process H1 (7-SS sTTI) in a subframe #n-2 to perform initial transmission in a subframe #n+9, and a second uplink reference resource determined by a terminal based on the UL grant 2 is an initial sTTI in the #n-2 and earlier than the first uplink reference resource. Therefore, the terminal determines that a target reference resource is the first uplink reference resource, and determines the CWS based on a receiving state of a HARQ process H0 in the first uplink reference resource. Because the receiving state of the HARQ process H0 is negative acknowledgement NACK, the terminal increases a CWS for the #n+9 and the #n+10 in an uplink burst.

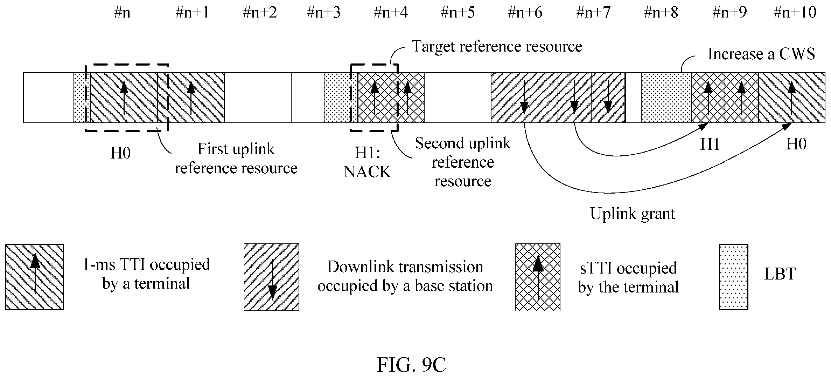

As shown in FIG. 9C, similar to that in FIG. 9A, the terminal determines that a second uplink reference resource is a target reference resource; however, a difference from FIG. 9A is that a receiving state of a HARQ process H1 in the target reference resource is negative acknowledgement NACK. Therefore, the terminal increases a CWS for the #n+9 and the #n+10 in an uplink burst.

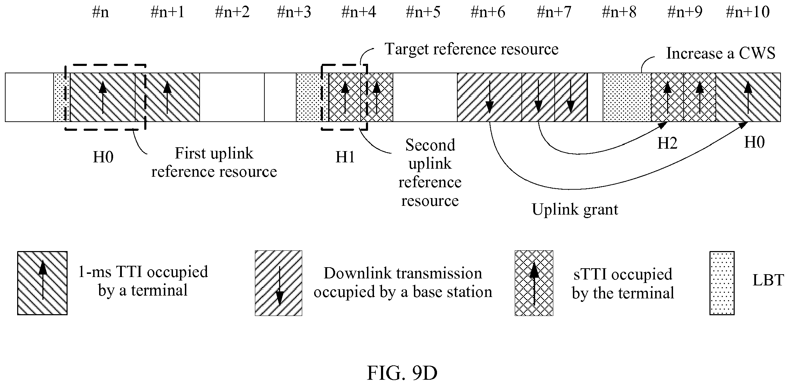

As shown in FIG. 9D, similar to that in FIG. 9A, the terminal determines that a second uplink reference resource is a target reference resource; however, a difference from FIG. 9A is that the base station no longer schedules a HARQ process H1 in the target reference resource to perform initial transmission or retransmission. Therefore, the terminal increases a CWS for the #n+9 and the #n+10 in an uplink burst.

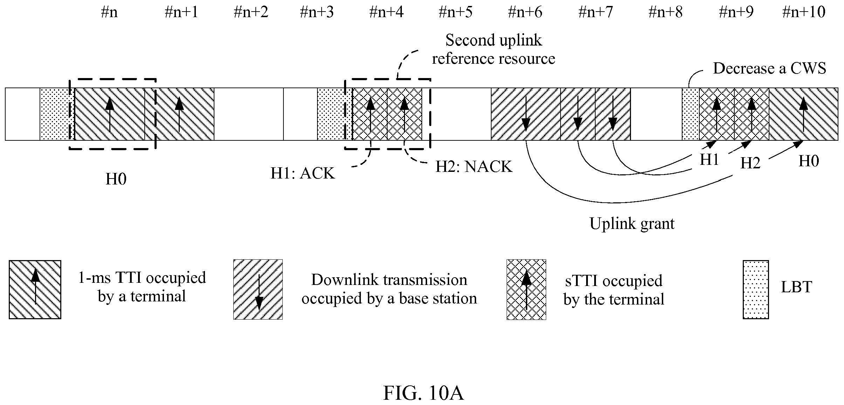

Further, FIG. 10A to FIG. 10B are schematic diagrams of determining, by a terminal, a contention window size based on a second uplink reference resource according to an embodiment of this application.

In an example, a first uplink reference resource includes a first uplink reference subframe, a second uplink reference resource includes a second uplink reference subframe, and all sTTIs in the second uplink reference subframe that are sent by the terminal are used for adjusting a CWS. As shown in FIG. 10A, a terminal determines that a second moment is 3 sTTIs before a downlink subframe #n+7 in which a base station sends a UL grant 2, and a second uplink reference resource is an initial uplink subframe #n+4 in a most recent uplink burst before the second moment. In addition, the terminal determines that the second uplink reference resource is a target reference resource, the #n+4 includes two sTTIs, the two sTTIs include a HARQ process H1 and a HARQ process H2 respectively, a receiving state of the HARQ process H1 is ACK, and a receiving state of the HARQ process H2 is NACK. Because a receiving status of at least one HARQ process is ACK, the terminal decreases a CWS.

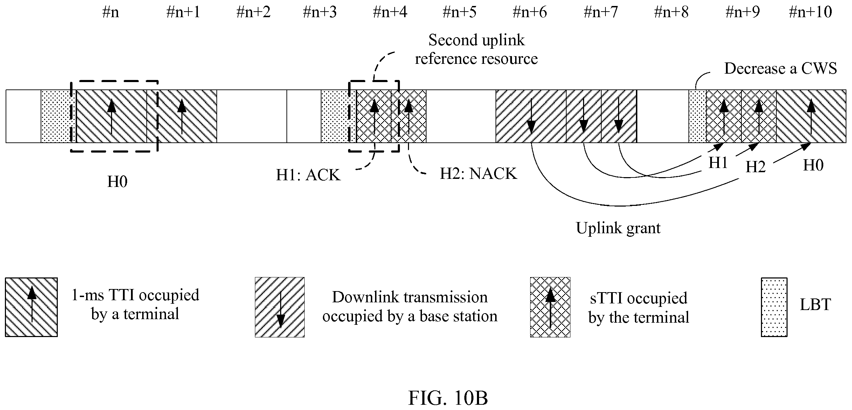

In another example, a first uplink reference resource includes a first uplink reference subframe, a second uplink reference resource includes a second uplink data channel or an sTTI (reference sTTI) corresponding to a second uplink data channel. As shown in FIG. 10B, a terminal determines that a second uplink reference resource is an initial sTTI in an initial uplink subframe #n+4 in a most recent uplink burst before a second moment, and the terminal decreases a CWS based on a fact that a receiving state of a HARQ process H1 in the sTTI is acknowledgement (ACK).

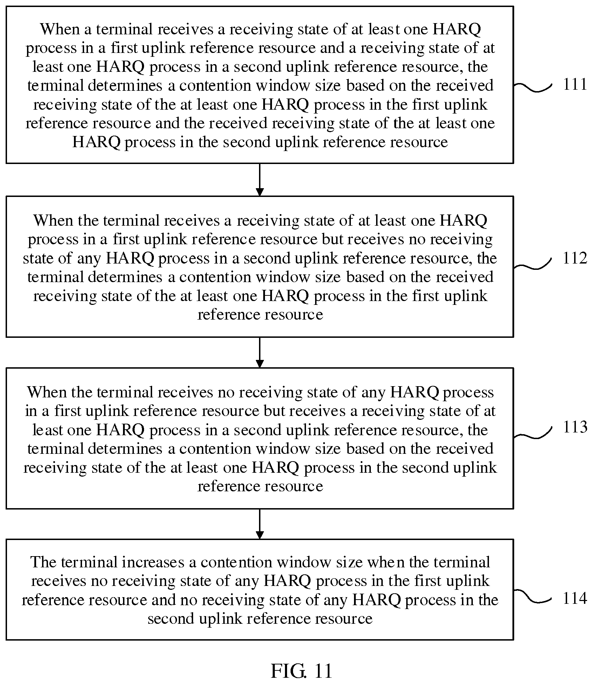

In an embodiment of this application, in another possible implementation, FIG. 11 is a flowchart of Embodiment 3 of a channel listening method according to an embodiment of this application. As shown in FIG. 11, in the channel listening method provided in this embodiment of this application, step 43 (The terminal determines a contention window size based on the first uplink reference resource and the second uplink reference resource) includes the following steps:
Step 111: When the terminal receives a receiving state of at least one HARQ process in the first uplink reference resource and a receiving state of at least one HARQ process in the second uplink reference resource, the terminal determines the contention window size based on the received receiving state of the at least one HARQ process in the first uplink reference resource and the received receiving state of the at least one HARQ process in the second uplink reference resource.

Optionally, that the terminal determines the contention window size based on the first uplink reference resource and the second uplink reference resource is specifically that the terminal determines the CWS based on a receiving situation of receiving states of HARQ processes in the first uplink reference resource and/or the second uplink reference resource and based on the receiving states of the HARQ processes. The receiving situation of the receiving states of the HARQ processes includes whether the receiving states of the HARQ processes (or TBs) in the first uplink reference resource and/or the second uplink reference resource are received. The receiving states of the HARQ processes include that when the terminal receives a receiving state of each of at least one HARQ process (or TB) in the first uplink reference resource and/or the second uplink reference resource, whether a receiving state of each of the at least one HARQ process is acknowledgement or negative acknowledgement. Specifically, if the terminal receives, between a moment at which the first uplink reference resource is received and a moment at which uplink grant information is received (including a moment at which the uplink grant information is received), a receiving state of at least one HARQ process in the first uplink reference resource, for example, a UL grant is used to instruct the terminal to perform initial transmission or retransmission based on the at least one HARQ process, it is referred to that the terminal receives a receiving state of a HARQ process (or TB) in the first uplink reference resource. Otherwise, it is referred to that the terminal receives no receiving state of a HARQ process (or TB) in the first uplink reference resource. If the terminal receives, between a moment at which the second uplink reference resource is received and a moment at which uplink grant information is received (including a moment at which the uplink grant information is received), a receiving state of at least one HARQ process in the second uplink reference resource, it is referred to that the terminal receives a receiving state of a HARQ process (or TB) in the second uplink reference resource. Otherwise, it is referred to that the terminal receives no receiving state of a HARQ process (or TB) in the second uplink reference resource.

Optionally, that the terminal receives or does not receive a receiving state, which is indicated by the base station, of at least one HARQ process (or TB) in an uplink reference resource is within a time interval between a moment at which the uplink reference resource is received and a moment, a subframe, or a TTI (including the moment, the subframe, or the TTI of the UL grant) in which the base station sends or the terminal receives a UL grant (used for determining the uplink reference resource). The uplink reference resource may be the first uplink reference resource or the second uplink reference resource.

It may be understood that the terminal receives receiving states of HARQ processes (or TBs) in the first uplink reference resource and the second uplink reference resource includes that the terminal not only receives a receiving state of at least one HARQ process (or TB) in the first uplink reference resource, but also receives a receiving state of at least one HARQ process (or TB) in the second uplink reference resource.

In this case, the terminal determines the contention window size based on the received receiving state of the at least one HARQ process in the first uplink reference resource and the received receiving state of the at least one HARQ process in the second uplink reference resource. Specifically, it is assumed that a set of the at least one HARQ process in the first uplink reference resource received by the terminal is a first HARQ process set, and a set of the at least one HARQ process in the second uplink reference resource received by the terminal is a second HARQ process set.

In an embodiment, if a receiving state of at least one (any one) of the HARQ processes included in the first HARQ process set and the second HARQ process set is acknowledgement, the terminal decreases the CWS. If all receiving states of the HARQ processes in the first HARQ process set and the second HARQ process set are negative acknowledgement, the terminal increases the CWS.

In another embodiment, the terminal selects a target HARQ process set from the first HARQ process set and the second HARQ process set, and if a receiving state of at least one (any one) of the HARQ processes included in the target HARQ process set is acknowledgement, the terminal decreases the CWS; otherwise, if all receiving states of the HARQ processes in the target HARQ process set are negative acknowledgement, the terminal increases the CWS. For example, the first HARQ process set may be used as the target HARQ process set.

Further, the target HARQ process set is a set of at least one HARQ process included in an uplink reference resource that is the more recent of the first uplink reference resource and the second uplink reference resource.

The step is similar to the solution of the embodiment shown in FIG. 7. A difference from the embodiment shown in FIG. 7 is that, in this solution, the more recent reference resource is a more recent uplink reference resource that is selected when a receiving state of each of at least one HARQ process (or TB) included in each of the first uplink reference resource and the second uplink reference resource is received by the terminal.

Optionally, when the terminal receives only a receiving state of at least one HARQ process (or TB) in either of the two uplink reference resources, to be specific, receives a receiving state of at least one HARQ process (or TB) in the first uplink reference resource but receives no receiving state of at least one HARQ process (or TB) in the second uplink reference resource, or receives a receiving state of at least one HARQ process (or TB) in the second uplink reference resource but receives no receiving state of at least one HARQ process (or TB) in the first uplink reference resource, the terminal considers that no HARQ receiving state of the two uplink reference resources is received, and therefore increases a CWS (even if a received HARQ receiving state of an uplink reference resource includes a acknowledgement state).

Further, in an embodiment, after decoding two uplink reference resources, when sending a UL grant, the base station may preferably schedule one of the uplink reference resources (regardless of whether the uplink reference resource is earlier or later than the other uplink reference resource), or the base station can send only one UL grant and cannot schedule two TTIs of different TTI lengths/decoding latencies. Therefore, the terminal may be able to receive a receiving state of only one of the uplink reference resources, and therefore can determine a CWS based only on the received receiving state of the uplink reference resource.

Specifically, if the terminal receives only a receiving state of at least one HARQ process included in either the first uplink reference resource or the second uplink reference resource, but receives no receiving state of any HARQ process included in the other uplink reference resource, the terminal can determine the CWS based only on the received receiving state of the HARQ process in the uplink reference resource. For details, refer to step 112 and step 113.

Step 112: When the terminal receives a receiving state of at least one HARQ process in the first uplink reference resource but receives no receiving state of any HARQ process in the second uplink reference resource, the terminal determines the contention window size based on the received receiving state of the at least one HARQ process in the first uplink reference resource.

In this step, if a receiving state, which is received by the terminal, of at least one HARQ process in the first uplink reference resource is acknowledgement, the terminal decreases the CWS; or if all receiving states, which are received by the terminal, of HARQ processes in the first uplink reference resource are negative acknowledgement, the terminal increases the CWS.

Step 113: When the terminal receives no receiving state of any HARQ process in the first uplink reference resource but receives a receiving state of at least one HARQ process in the second uplink reference resource, the terminal determines the contention window size based on the received receiving state of the at least one HARQ process in the second uplink reference resource.

In this step, if a receiving state, which is received by the terminal, of at least one HARQ process in the second uplink reference resource is acknowledgement, the terminal decreases the CWS; or if all receiving states, which are received by the terminal, of HARQ processes in the second uplink reference resource are negative acknowledgement, the terminal increases the CWS.

Further, in still another embodiment, step 43 (The terminal determines a contention window size based on the first uplink reference resource and the second uplink reference resource) is implemented by performing step 114.

Step 114: The terminal increases the contention window size when the terminal receives no receiving state of any HARQ process in the first uplink reference resource and no receiving state of any HARQ process in the second uplink reference resource.

Specifically, in this embodiment, the terminal receives no receiving state of any HARQ process included in either of the two uplink reference resources. This case is similar to a case in which the CWS is determined when only one uplink reference resource is selected. The base station cannot immediately schedule a HARQ process in an uplink reference resource to perform initial transmission or retransmission. Therefore, the terminal cannot obtain receiving state information, and accordingly increases the CWS.

In other words, when the terminal receives no receiving state of any HARQ process in the first uplink reference resource and receives no receiving state of any HARQ process in the second uplink reference resource, the terminal increases the contention window size.

According to the channel listening method provided in this embodiment of this application, the terminal determines the contention window size based on the received receiving state of at least one HARQ process in the first uplink reference resource or based on the received receiving state of at least one HARQ process in the second uplink reference resource; and decreases the CWS when a receiving state of at least one HARQ process is acknowledgement, increases the CWS when all received receiving states of HARQ processes are negative acknowledgement, or increases the contention window size when the terminal receives no receiving state of any HARQ process in the first uplink reference resource and the second uplink reference resource. Compared with the prior art, this technical solution can more accurately adjust the CWS, and then can more accurately reflect a real-time channel state.

It should be noted that in the embodiment shown in FIG. 7, to ensure that the terminal accurately adjusts the CWS, the base station needs to immediately schedule a more recent uplink reference resource; however, in the embodiment shown in FIG. 11, the base station does not need to perform scheduling. Therefore, in comparison with the embodiment shown in FIG. 7, a constraint on scheduling performed by the base station is reduced in the embodiment shown in FIG. 11.

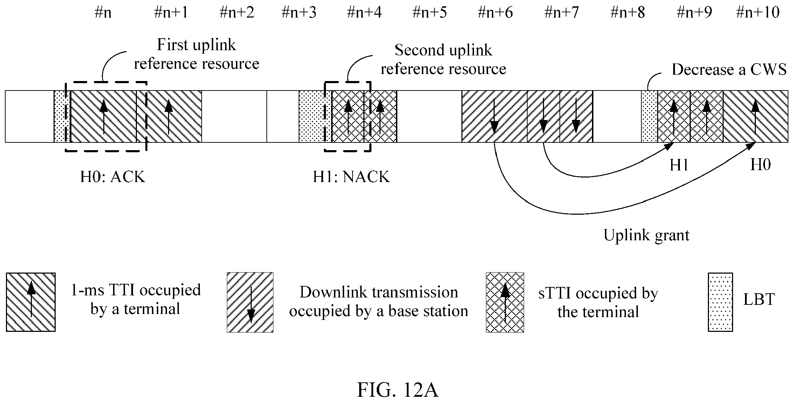

FIG. 12A to FIG. 12D are schematic diagrams of determining, by a terminal, a contention window size based on a first uplink reference resource and a second uplink reference resource in the embodiment shown in FIG. 11.

As shown in FIG. 12A, it is assumed that a base station sends, on a downlink control channel, a UL grant 1 in a subframe #n+6 to schedule a HARQ process H0 (1-ms TTI) in a subframe #n to perform initial transmission (a receiving state of the H0 is ACK) in a subframe #n+10, and the base station sends, on a downlink control channel, a UL grant 2 in a subframe #n+7 to schedule a HARQ process H1 (7-SS sTTI) in a subframe #n+4 to perform retransmission (a receiving state of the H1 is NACK) in a subframe #n+9.

A first preset time interval corresponding to 1-ms TTI transmission is 4 ms, and a second preset time interval corresponding to 7-SS sTTI transmission is 4 sTTIs. Because the UL grant 2 is later than the UL grant 1, the terminal determines a first uplink reference resource and a second uplink reference resource based on the more recent UL grant 2. A first moment is 3 ms before the downlink subframe #n+7 in which the base station sends the UL grant 2, in other words, the subframe #n+4. The first uplink reference resource is an initial uplink subframe #n in a most recent uplink burst before the first moment. A second moment is 3 sTTIs before a downlink sTTI in which the base station sends the UL grant 2, in other words, a second sTTI in a subframe #n+5 (it is assumed that the #n+5 is of a 7-SS structure). The second uplink reference resource is an initial uplink sTTI (an initial sTTI in the #n+4) in a most recent uplink burst before the second moment. According to step 111, because receiving states of both the first uplink reference resource and the second reference resource are received and an ACK state is included (a receiving state of at least one HARQ process in the first uplink reference resource is acknowledgement), the terminal decreases a CWS.

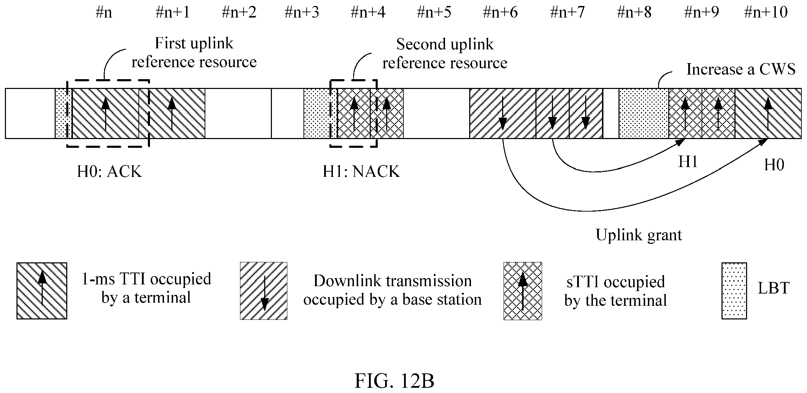

As shown in FIG. 12B, when the terminal selects a second HARQ process set corresponding to the more recent second uplink reference resource as a target HARQ process set (including a HARQ process HI), because a receiving state of the HARQ process H1 is NACK, the terminal increases a CWS.

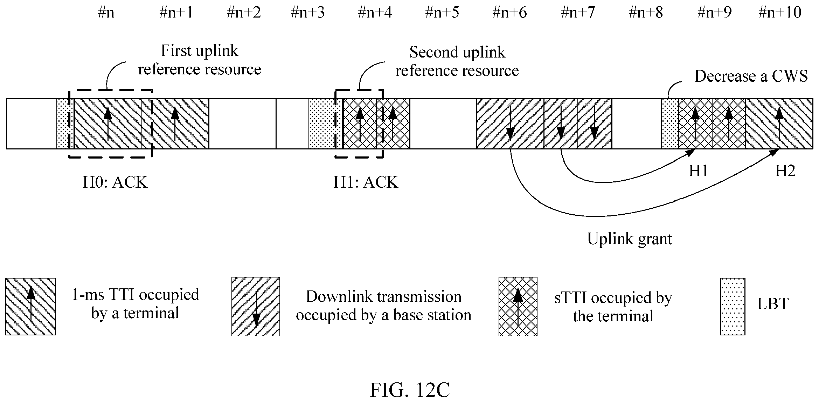

As shown in FIG. 12C, a base station sends, on a downlink control channel, a UL grant 1 in a subframe #n+6, but does not schedule a HARQ process H0 (1-ms TTI) in a subframe #n to perform initial transmission or retransmission, and the base station sends, on a downlink control channel, a UL grant 2 in a subframe #n+7 to schedule the HARQ process H1 (7-SS sTTI) in a subframe #n+4 to perform initial transmission (a receiving state of a HARQ process H1 is ACK) in a subframe #n+9. It can be learned from FIG. 12C that the terminal receives only retransmission of the HARQ process H1. Therefore, the terminal determines a CWS based only on the received receiving state of the HARQ process H1 in a second uplink reference resource. Because the receiving state of the HARQ process H1 is acknowledgement (an ACK state), the terminal decreases the CWS.

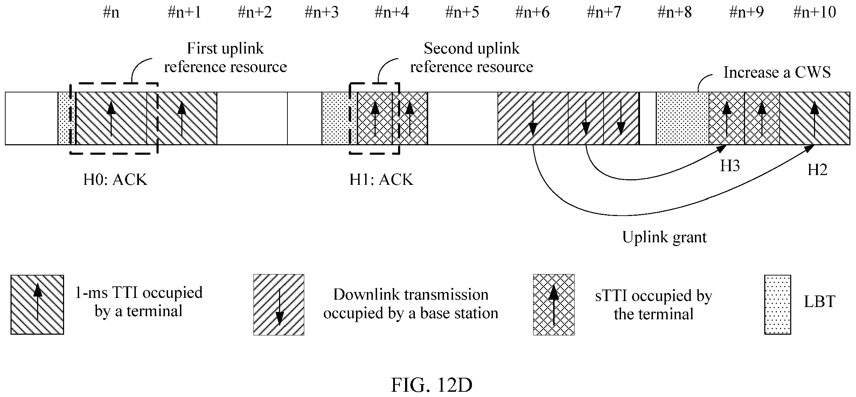

As shown in FIG. 12D, a base station sends, on a downlink control channel, a UL grant 1 in a subframe #n+6, but the UL grant 1 does not schedule a HARQ process H0 (1-ms TTI) in a subframe #n to perform initial transmission or retransmission, and the base station sends, on a downlink control channel, a UL grant 2 in a subframe #n+7, but the UL grant 2 does not schedule a HARQ process H1 (7-SS sTTI) to perform initial transmission or retransmission. In this case, the terminal receives no receiving state of any HARQ process in any uplink reference resource. Therefore, the terminal increases a CWS.

Optionally, in the channel listening method provided in any one of the foregoing embodiments, the first uplink reference resource includes a first uplink reference subframe, the second uplink reference resource includes a second uplink reference subframe, the first uplink reference subframe includes at least one first uplink data channel or at least one first transmission time interval, and the second uplink reference subframe includes at least one second uplink data channel or at least one second transmission time interval; or
the first uplink reference resource includes a first uplink reference subframe, the first uplink reference subframe includes at least one first uplink data channel or at least one first transmission time interval, and the second uplink reference resource includes at least one second uplink data channel or at least one second transmission time interval.

Optionally, in a typical scenario, two uplink data channels correspond to different TTI lengths, and a length of an sTTI corresponding to one of the uplink data channels (for example, the second uplink data channel) is shorter than a length of a 1-ms TTI or an sTTI corresponding to the other uplink data channel (for example, the first uplink data channel). When the first uplink data channel corresponds to the 1-ms TTI and the second uplink data channel corresponds to the sTTI, the first uplink reference resource includes a first uplink reference subframe, and the second uplink reference resource may be defined in two manners. In manner 1, the second uplink reference resource includes a second uplink reference subframe, and all sTTIs in the second uplink reference subframe that are sent by the terminal are used for adjusting a CWS. In manner 2, the second uplink reference resource includes a second uplink data channel or an sTTI corresponding to a second uplink data channel.

An advantage of manner 1 is that there are more reference samples, and an advantage of manner 2 is that a reference resource is more recent and can more easily reflect a collision situation. When a terminal collides, during uplink transmission, with another node that performs sending at the same time, there is a higher probability that the collision occurs at a start location of the transmission. Therefore, a receiving state of (a TB block or a HARQ process in) an uplink data channel at the start location of the transmission can better reflect the collision situation. An increase in the CWS is to mitigate a collision problem.

Optionally, the first uplink reference resource includes a first uplink reference subframe. If the first uplink reference subframe includes a first transmission time interval, the first transmission time interval is of a 1-ms TTI structure, and the terminal adjusts the CWS based on the first uplink reference resource, all HARQ processes in the 1-ms TTI may be used for adjusting the CWS. Correspondingly, the second uplink reference resource includes a second uplink reference subframe, and the second uplink reference subframe includes a second transmission time interval. If the second transmission time interval is of an sTTI structure, and the terminal adjusts the CWS based on the second uplink reference resource, all HARQ processes in all sTTIs in the second uplink reference subframe may be used for adjusting the CWS.

Optionally, the first uplink reference resource includes at least one first uplink data channel or a first transmission time interval (including a first transmission time interval of a first uplink data channel, for example, a 1-ms TTI) corresponding to at least one first uplink data channel. The second uplink reference resource includes at least one second uplink data channel or a second transmission time interval (including a first transmission time interval of a first uplink data channel, for example, an sTTI) corresponding to at least one second uplink data channel.

In this embodiment of this application, the first uplink reference resource includes at least one first uplink data channel, and the first uplink data channel is an uplink channel that includes a UL-SCH or an uplink channel in which the terminal sends data information. Among uplink channels, only a PUSCH that includes a UL-SCH requires the base station to use an NDI to indicate whether a receiving state of a TB (or HARQ process) carried on the PUSCH is acknowledgement or negative acknowledgement. For example, other uplink channels such as a sounding reference signal (Sounding Reference Signal, SRS) and a demodulation reference signal (Demodulation Reference Signal, DMRS) does not require the base station to feed back a receiving state. Therefore, the first uplink reference resource includes data information. A case in which the second uplink reference resource includes at least one second uplink data channel is similar to this. Details are not described herein.

It may be understood that the first uplink reference resource includes the first uplink reference subframe and the first uplink reference subframe includes at least one first uplink data channel may be explained as follows:

From the perspective of a base station (Cell-specific), the base station schedules at least one first uplink data channel on the first uplink reference resource. If the first uplink reference resource includes at least two uplink data channels, the uplink data channels may be used to schedule a same terminal or schedule different terminals. From the perspective of a terminal, the terminal determines a CWS by selecting only a scheduled first uplink reference resource or by selecting a scheduled first uplink reference resource on which the terminal actually sends the first uplink data channel.

A case in which the second uplink reference resource includes at least one second uplink data channel is similar to this. Details are not described herein. For example, the second uplink reference resource is an uplink subframe, the subframe is of a 7-SS structure and includes two 7-SS sTTIs, the terminal is scheduled to send uplink data only on a second sTTI, and an initial sTTI in the subframe is used to schedule another terminal to send uplink data. In this case, it is also referred to that the second reference resource includes two uplink data channels, and the terminal adjusts a CWS based on a receiving state of (a TB or a HARQ process in) the second sTTI.

Further, in this embodiment of this application, a first time-domain resource length occupied by the first uplink data channel or the first transmission time interval is greater than a second time-domain resource length occupied by the second uplink data channel or the second transmission time interval.

When two uplink data channels correspond to different TTI lengths, and a length of an sTTI corresponding to one of the uplink data channels (for example, the second uplink data channel) is shorter than a length of a 1-ms TTI or an sTTI corresponding to the other uplink data channel (for example, the first uplink data channel), the first time-domain resource length occupied by the first uplink data channel is greater than the second time-domain resource length occupied by the second uplink data channel, or a TTI length corresponding to the first uplink data channel is greater than a TTI length corresponding to the second uplink data channel.

Because TTI lengths of the first uplink data channel and the second uplink data channel are different, in other words, data packets are of different sizes, decoding latencies corresponding to the TTI lengths are also different. Optionally, the first uplink data channel corresponds to a 1-ms TTI, and the second uplink data channel corresponds to an sTTI. Optionally, both the first uplink data channel and the second uplink data channel correspond to sTTIs; however, an sTTI length of the first uplink data channel is greater than an sTTI length of the second uplink data channel. For example, an sTTI corresponding to the first uplink data channel is of a 7-SS structure, and an sTTI corresponding to the second uplink data channel is of a 2-SS structure.

It may be understood that the first time-domain resource occupied by the first uplink data channel may include only a time domain resource occupied by an uplink shared channel PUSCH or a short uplink shared channel sPUSCH that sends data information UL-SCH, or may be a time domain resource occupied by a TTI in which a PUSCH or an sPUSCH is located. In other words, the first time-domain resource includes a demodulation reference signal DMRS.

For example, when a time domain resource occupied by a TTI is considered, a length of a time domain resource occupied by a 1 ms PUSCH of a 1-ms TTI is 1 ms, a length of a time domain resource occupied by an sPUSCH whose sTTI length is 7 SSs is 7 SSs, and a length of a time domain resource occupied by an sPUSCH whose sTTI length is 2 SSs is 2 SSs. If only a time domain resource occupied by a PUSCH or an sPUSCH is considered and a time domain resource occupied by a DMRS is not considered, for an sPUSCH whose sTTI length is 2 SSs, if one SS is a DMRS, a time domain resource occupied by the SS includes only 1 SS for sending UL-SCH information. A definition of the second time-domain resource occupied by the second uplink data channel is similar to the definition of the first time-domain resource. Details are not described herein.

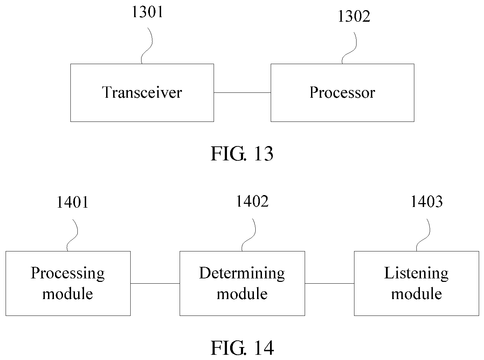

FIG. 13 is a schematic structural diagram of a channel listening apparatus according to an embodiment of this application. The apparatus may be integrated into the foregoing terminal. As shown in FIG. 13, the apparatus includes a transceiver 1301 and a processor 1302. Optionally, the apparatus may further include a memory. The memory is configured to store an instruction to be executed by the processor 1302. Optionally, the transceiver 1301 may be implemented by a transmitter and a receiver that function independently. Both the transmitter and the receiver may be implemented by using an antenna or in other forms. This is not limited in this embodiment of this application.

The transceiver 1301 is configured to receive uplink grant information sent by a base station.

The processor 1302 is configured to: determine a first uplink reference resource and a second uplink reference resource based on the uplink grant information received by the transceiver 1301; determine a contention window size based on the first uplink reference resource and the second uplink reference resource; and listen to a channel based on the contention window size.

Optionally, when the uplink grant information includes a first uplink grant, the processor 1302 is specifically configured to determine the first uplink reference resource and the second uplink reference resource based on the first uplink grant.

In this embodiment, the first uplink reference resource is earlier than the first uplink grant, a time interval between the first uplink reference resource and the first uplink grant is greater than or equal to a first preset time interval, the second uplink reference resource is earlier than the first uplink grant, a time interval between the second uplink reference resource and the first uplink grant is greater than or equal to a second preset time interval, and the first preset time interval is greater than the second preset time interval.

Optionally, when the uplink grant information includes a first uplink grant and a second uplink grant, the processor 1302 is specifically configured to determine the first uplink reference resource based on the first uplink grant, and determine the second uplink reference resource based on the second uplink grant.

In this embodiment, the first uplink reference resource is earlier than the first uplink grant, a time interval between the first uplink reference resource and the first uplink grant is greater than or equal to a first preset time interval, the second uplink reference resource is earlier than the second uplink grant, a time interval between the second uplink reference resource and the second uplink grant is greater than or equal to a second preset time interval, and the first preset time interval is greater than the second preset time interval.

Optionally, in an implementation, the processor 1302 is specifically configured to: determine that the more recent of the first uplink reference resource and the second uplink reference resource is a target reference resource; and determine the contention window size based on the target reference resource.

In an example, the processor 1302 is specifically configured to decrease the contention window size when the transceiver 1301 receives that a receiving state of at least one hybrid automatic repeat request HARQ process in the target reference resource is acknowledgement.

Further, the processor 1302 is further specifically configured to increase the contention window size when a receiving state, which is received by the transceiver 1301, of each of at least one hybrid automatic repeat request HARQ process in the target reference resource is negative acknowledgement, or when the transceiver 1301 receives no receiving state of any HARQ process in the target reference resource.

In another example, the processor 1302 is specifically configured to: when the transceiver 1301 receives a receiving state of at least one hybrid automatic repeat request HARQ process in the first uplink reference resource and a receiving state of at least one HARQ process in the second uplink reference resource, determine the contention window size based on the received receiving state of the at least one HARQ process in the first uplink reference resource and the received receiving state of the at least one HARQ process in the second uplink reference resource.

Further, the processor 1302 is further specifically configured to: when the transceiver 1301 receives a receiving state of at least one hybrid automatic repeat request HARQ process in the first uplink reference resource but receives no receiving state of any HARQ process in the second uplink reference resource, determine the contention window size based on the received receiving state of the at least one HARQ process in the first uplink reference resource; or when the transceiver 1301 receives no receiving state of any HARQ process in the first uplink reference resource but receives a receiving state of at least one HARQ process in the second uplink reference resource, determine the contention window size based on the received receiving state of the at least one HARQ process in the second uplink reference resource.

Further, the processor 1302 is further specifically configured to increase the contention window size when the transceiver 1301 receives no receiving state of any hybrid automatic repeat request HARQ process in the first uplink reference resource and no receiving state of any HARQ process in the second uplink reference resource.

Optionally, the first uplink reference resource includes a first uplink reference subframe, the second uplink reference resource includes a second uplink reference subframe, the first uplink reference subframe includes at least one first uplink data channel or at least one first transmission time interval, and the second uplink reference subframe includes at least one second uplink data channel or at least one second transmission time interval; or
the first uplink reference resource includes a first uplink reference subframe, the first uplink reference subframe includes at least one first uplink data channel or at least one first transmission time interval, and the second uplink reference resource includes at least one second uplink data channel or at least one second transmission time interval.

Optionally, a first time-domain resource length occupied by the first uplink data channel or the first transmission time interval is greater than a second time-domain resource length occupied by the second uplink data channel or the second transmission time interval.

An implementation principle and technical effects of the apparatus are similar to those in the method embodiments shown in FIG 1 to FIG. 12. Details are not described herein again.

FIG. 14 is a schematic structural diagram of another channel listening apparatus according to an embodiment of this application. The apparatus may be integrated into the foregoing terminal. As shown in FIG. 14, the apparatus includes a receiving module 1401, a determining module 1402, and a listening module 1403.

The receiving module 1401 is configured to receive uplink grant information sent by a base station.

The determining module 1402 is configured to: determine a first uplink reference resource and a second uplink reference resource based on the uplink grant information; and determine a contention window size based on the first uplink reference resource and the second uplink reference resource.

The listening module 1403 is configured to listen to a channel based on the contention window size.

Optionally, when the uplink grant information includes a first uplink grant, the determining module 1402 is specifically configured to determine the first uplink reference resource and the second uplink reference resource based on the first uplink grant.

In this embodiment, the first uplink reference resource is earlier than the first uplink grant, a time interval between the first uplink reference resource and the first uplink grant is greater than or equal to a first preset time interval, the second uplink reference resource is earlier than the first uplink grant, a time interval between the second uplink reference resource and the first uplink grant is greater than or equal to a second preset time interval, and the first preset time interval is greater than the second preset time interval.

Optionally, when the uplink grant information includes a first uplink grant and a second uplink grant, the determining module 1402 is specifically configured to determine the first uplink reference resource based on the first uplink grant, and determine the second uplink reference resource based on the second uplink grant.

In this embodiment, the first uplink reference resource is earlier than the first uplink grant, a time interval between the first uplink reference resource and the first uplink grant is greater than or equal to a first preset time interval, the second uplink reference resource is earlier than the second uplink grant, a time interval between the second uplink reference resource and the second uplink grant is greater than or equal to a second preset time interval, and the first preset time interval is greater than the second preset time interval.

Optionally, the determining module 1402 is specifically configured to: determine that the more recent of the first uplink reference resource and the second uplink reference resource is a target reference resource; and determine the contention window size based on the target reference resource.

Optionally, the determining module 1402 is specifically configured to decrease the contention window size when the receiving module 1401 receives that a receiving state of at least one hybrid automatic repeat request HARQ process in the target reference resource is acknowledgement.

Further, the determining module 1402 is further specifically configured to increase the contention window size when a receiving state, which is received by the receiving module 1401, of each of at least one hybrid automatic repeat request HARQ process in the target reference resource is negative acknowledgement, or the receiving module 1401 receives no receiving state of any HARQ process in the target reference resource.

In an embodiment of this application, the determining module 1402 is specifically configured to: when the receiving module 1401 receives a receiving state of at least one hybrid automatic repeat request HARQ process in the first uplink reference resource and a receiving state of at least one HARQ process in the second uplink reference resource, determine the contention window size based on the received receiving state of the at least one HARQ process in the first uplink reference resource and the received receiving state of the at least one HARQ process in the second uplink reference resource.

Further, the determining module 1402 is further specifically configured to:
when the receiving module 1401 receives a receiving state of at least one hybrid automatic repeat request HARQ process in the first uplink reference resource but receives no receiving state of any HARQ process in the second uplink reference resource, determine the contention window size based on the received receiving state of the at least one HARQ process in the first uplink reference resource; or when the receiving module 1401 receives no receiving state of any HARQ process in the first uplink reference resource but receives a receiving state of at least one HARQ process in the second uplink reference resource, determine the contention window size based on the received receiving state of the at least one HARQ process in the second uplink reference resource.

Further, the determining module 1402 is further specifically configured to increase the contention window size when the receiving module 1401 receives no receiving state of any hybrid automatic repeat request HARQ process in the first uplink reference resource and no receiving state of any HARQ process in the second uplink reference resource.

Optionally, the first uplink reference resource includes a first uplink reference subframe, the second uplink reference resource includes a second uplink reference subframe, the first uplink reference subframe includes at least one first uplink data channel or at least one first transmission time interval, and the second uplink reference subframe includes at least one second uplink data channel or at least one second transmission time interval; or
the first uplink reference resource includes a first uplink reference subframe, the first uplink reference subframe includes at least one first uplink data channel or at least one first transmission time interval, and the second uplink reference resource includes at least one second uplink data channel or at least one second transmission time interval.

Optionally, a first time-domain resource length occupied by the first uplink data channel or the first transmission time interval is greater than a second time-domain resource length occupied by the second uplink data channel or the second transmission time interval.

An implementation principle and technical effects of the apparatus are similar to those in the method embodiments shown in FIG. 1 to FIG. 12. Details are not described herein again.

It should be noted that, division of modules of the foregoing apparatus is merely logical function division. In actual implementation, all or some of the modules may be integrated into one physical entity, or the modules may be physically separated. In addition, these modules may all be implemented in the form of software invoked by using a processing element, or may all be implemented in the form of hardware; or some modules may be implemented in the form of software invoked by using a processing element and other modules are implemented in the form of hardware. For example, the determining module may be an independently disposed processing element, or may be integrated into a chip of the foregoing apparatus for implementation, and may be stored, in the form of program code, in a memory of the foregoing apparatus, and invoked by a processing element of the foregoing apparatus to perform the functions of the foregoing determining module. Implementation of other modules is similar to this. In addition, all or some of these modules may be integrated together or these modules may be implemented separately. The processing element herein may be an integrated circuit and have a signal processing capability. In an implementation process, steps in the foregoing methods or the foregoing modules may be implemented by using an integrated logical circuit in the form of hardware in the processing element, or by using instructions in the form of software.

For example, the foregoing modules may be configured as one or more integrated circuits that perform the foregoing methods, for example, one or more application-specific integrated circuits (Application Specific Integrated Circuit, ASIC), one or more microprocessors (digital signal processor, DSP), or one or more field programmable gate arrays (Field Programmable Gate Array, FPGA). For another example, when one of the foregoing modules is implemented by using the processing element to invoke program code, the processing element may be a general-purpose processor, for example, a central processing unit (Central Processing Unit, CPU), or another processor that can invoke the program code. For another example, these modules may be integrated together and implemented in the form of a system-on-a-chip (system-on-a-chip, SOC).

All or some of the foregoing embodiments may be implemented by using software, hardware, firmware, or any combination thereof. When software is used to implement the embodiments, the embodiments may be implemented completely or partially in the form of a computer program product. The computer program product includes one or more computer instructions. When the computer program instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, DVD), a semiconductor medium (for example, a solid state disk solid state disk (SSD)), or the like.

## Claims

1. A channel listening method, comprising:
receiving, by a terminal, uplink grant information sent by a base station;
determining, by the terminal, a first uplink reference resource and a second uplink reference resource based on the uplink grant information;
determining, by the terminal, a contention window size based on the first uplink reference resource and the second uplink reference resource; and
listening to, by the terminal, a channel based on the contention window size.

2. The method according to claim 1, wherein the uplink grant information comprises a first uplink grant; and
the determining, by the terminal, a first uplink reference resource and a second uplink reference resource based on the uplink grant information comprises:
determining, by the terminal, the first uplink reference resource and the second uplink reference resource based on the first uplink grant.

3. The method according to claim 2, wherein
the first uplink reference resource is earlier than the first uplink grant, a time interval between the first uplink reference resource and the first uplink grant is greater than or equal to a first preset time interval, the second uplink reference resource is earlier than the first uplink grant, a time interval between the second uplink reference resource and the first uplink grant is greater than or equal to a second preset time interval, and the first preset time interval is greater than the second preset time interval.

4. The method according to claim 1, wherein the uplink grant information comprises a first uplink grant and a second uplink grant; and
the determining, by the terminal, a first uplink reference resource and a second uplink reference resource based on the uplink grant information comprises:
determining, by the terminal, the first uplink reference resource based on the first uplink grant, and determining the second uplink reference resource based on the second uplink grant.

5. The method according to claim 4, wherein
the first uplink reference resource is earlier than the first uplink grant, a time interval between the first uplink reference resource and the first uplink grant is greater than or equal to a first preset time interval, the second uplink reference resource is earlier than the second uplink grant, a time interval between the second uplink reference resource and the second uplink grant is greater than or equal to a second preset time interval, and the first preset time interval is greater than the second preset time interval.

6. The method according to any one of claims 1 to 5, wherein the determining, by the terminal, a contention window size based on the first uplink reference resource and the second uplink reference resource comprises:
determining, by the terminal, that the more recent of the first uplink reference resource and the second uplink reference resource is a target reference resource; and
determining, by the terminal, the contention window size based on the target reference resource.

7. The method according to claim 6, wherein the determining, by the terminal, the contention window size based on the target reference resource comprises:
decreasing, by the terminal, the contention window size when the terminal receives that a receiving state of at least one hybrid automatic repeat request HARQ process in the target reference resource is acknowledgement.

8. The method according to claim 6 or 7, wherein the determining, by the terminal, the contention window size based on the target reference resource comprises:
increasing, by the terminal, the contention window size when a receiving state, which is received by the terminal, of each of at least one hybrid automatic repeat request HARQ process in the target reference resource is negative acknowledgement, or when the terminal receives no receiving state of any HARQ process in the target reference resource.

9. The method according to any one of claims 1 to 5, wherein the determining, by the terminal, a contention window size based on the first uplink reference resource and the second uplink reference resource comprises:
when the terminal receives a receiving state of at least one hybrid automatic repeat request HARQ process in the first uplink reference resource and a receiving state of at least one HARQ process in the second uplink reference resource, determining, by the terminal, the contention window size based on the received receiving state of the at least one HARQ process in the first uplink reference resource and the received receiving state of the at least one HARQ process in the second uplink reference resource.

10. The method according to any one of claims 1 to 5 or claim 9, wherein the determining, by the terminal, a contention window size based on the first uplink reference resource and the second uplink reference resource comprises:
when the terminal receives a receiving state of at least one hybrid automatic repeat request HARQ process in the first uplink reference resource but receives no receiving state of any HARQ process in the second uplink reference resource, determining, by the terminal, the contention window size based on the received receiving state of the at least one HARQ process in the first uplink reference resource; or
when the terminal receives no receiving state of any HARQ process in the first uplink reference resource but receives a receiving state of at least one HARQ process in the second uplink reference resource, determining, by the terminal, the contention window size based on the received receiving state of the at least one HARQ process in the second uplink reference resource.

11. The method according to any one of claims 1 to 5, claim 9, or claim 10, wherein the determining, by the terminal, a contention window size based on the first uplink reference resource and the second uplink reference resource comprises:
increasing, by the terminal, the contention window size when the terminal receives no receiving state of any hybrid automatic repeat request HARQ process in the first uplink reference resource and no receiving state of any HARQ process in the second uplink reference resource.

12. The method according to any one of claims 1 to 11, wherein:
the first uplink reference resource comprises a first uplink reference subframe, the second uplink reference resource comprises a second uplink reference subframe, the first uplink reference subframe comprises at least one first uplink data channel or at least one first transmission time interval, and the second uplink reference subframe comprises at least one second uplink data channel or at least one second transmission time interval; or
the first uplink reference resource comprises a first uplink reference subframe, the first uplink reference subframe comprises at least one first uplink data channel or at least one first transmission time interval, and the second uplink reference resource comprises at least one second uplink data channel or at least one second transmission time interval.

13. The method according to claim 12, wherein a first time-domain resource length occupied by the first uplink data channel or the first transmission time interval is greater than a second time-domain resource length occupied by the second uplink data channel or the second transmission time interval.

14. A channel listening apparatus, comprising a transceiver and a processor, wherein
the transceiver is configured to receive uplink grant information sent by a base station; and
the processor is configured to: determine a first uplink reference resource and a second uplink reference resource based on the uplink grant information received by the transceiver; determine a contention window size based on the first uplink reference resource and the second uplink reference resource; and listen to a channel based on the contention window size.

15. The apparatus according to claim 14, wherein when the uplink grant information comprises a first uplink grant, the processor is specifically configured to determine the first uplink reference resource and the second uplink reference resource based on the first uplink grant.

16. The apparatus according to claim 15, wherein
the first uplink reference resource is earlier than the first uplink grant, a time interval between the first uplink reference resource and the first uplink grant is greater than or equal to a first preset time interval, the second uplink reference resource is earlier than the first uplink grant, a time interval between the second uplink reference resource and the first uplink grant is greater than or equal to a second preset time interval, and the first preset time interval is greater than the second preset time interval.

17. The apparatus according to claim 14, wherein when the uplink grant information comprises a first uplink grant and a second uplink grant, the processor is specifically configured to determine the first uplink reference resource based on the first uplink grant, and determine the second uplink reference resource based on the second uplink grant.

18. The apparatus according to claim 17, wherein
the first uplink reference resource is earlier than the first uplink grant, a time interval between the first uplink reference resource and the first uplink grant is greater than or equal to a first preset time interval, the second uplink reference resource is earlier than the second uplink grant, a time interval between the second uplink reference resource and the second uplink grant is greater than or equal to a second preset time interval, and the first preset time interval is greater than the second preset time interval.

19. The apparatus according to any one of claims 14 to 18, wherein the processor is specifically configured to: determine that the more recent of the first uplink reference resource and the second uplink reference resource is a target reference resource; and determine the contention window size based on the target reference resource.

20. The apparatus according to claim 19, wherein the processor is specifically configured to decrease the contention window size when the transceiver receives that a receiving state of at least one hybrid automatic repeat request HARQ process in the target reference resource is acknowledgement.

21. The apparatus according to claim 19 or 20, wherein the processor is further specifically configured to increase the contention window size when a receiving state, which is received by the transceiver, of each of at least one hybrid automatic repeat request HARQ process in the target reference resource is negative acknowledgement, or when the transceiver receives no receiving state of any HARQ process in the target reference resource.

22. The apparatus according to any one of claims 14 to 18, wherein the processor is specifically configured to: when the transceiver receives a receiving state of at least one hybrid automatic repeat request HARQ process in the first uplink reference resource and a receiving state of at least one HARQ process in the second uplink reference resource, determine the contention window size based on the received receiving state of the at least one HARQ process in the first uplink reference resource and the received receiving state of the at least one HARQ process in the second uplink reference resource.

23. The apparatus according to any one of claims 14 to 18 or claim 22, wherein the processor is further specifically configured to: when the transceiver receives a receiving state of at least one hybrid automatic repeat request HARQ process in the first uplink reference resource but receives no receiving state of any HARQ process in the second uplink reference resource, determine the contention window size based on the received receiving state of the at least one HARQ process in the first uplink reference resource; or when the transceiver receives no receiving state of any HARQ process in the first uplink reference resource but receives a receiving state of at least one HARQ process in the second uplink reference resource, determine the contention window size based on the received receiving state of the at least one HARQ process in the second uplink reference resource.

24. The apparatus according to any one of claims 14 to 18, claim 22, or claim 23, wherein the processor is further specifically configured to increase the contention window size when the transceiver receives no receiving state of any hybrid automatic repeat request HARQ process in the first uplink reference resource and no receiving state of any HARQ process in the second uplink reference resource.

25. The apparatus according to any one of claims 14 to 24, wherein
the first uplink reference resource comprises a first uplink reference subframe, the second uplink reference resource comprises a second uplink reference subframe, the first uplink reference subframe comprises at least one first uplink data channel or at least one first transmission time interval, and the second uplink reference subframe comprises at least one second uplink data channel or at least one second transmission time interval; or
the first uplink reference resource comprises a first uplink reference subframe, the first uplink reference subframe comprises at least one first uplink data channel or at least one first transmission time interval, and the second uplink reference resource comprises at least one second uplink data channel or at least one second transmission time interval.

26. The apparatus according to claim 25, wherein a first time-domain resource length occupied by the first uplink data channel or the first transmission time interval is greater than a second time-domain resource length occupied by the second uplink data channel or the second transmission time interval.
